(19) **Europäisches Patentamt**
**European Patent Office**
**Office européen des brevets**

(11) **EP 2 724 869 A1**

(12) # EUROPEAN PATENT APPLICATION
published in accordance with Art. 153(4) EPC

(43) Date of publication:
**30.04.2014 Bulletin 2014/18**

(51) Int Cl.:
**B44C 1/22** *(2006.01)* **B23K 26/36** *(2014.01)*
**G02B 5/18** *(2006.01)*

(21) Application number: **12803476.6**

(22) Date of filing: **19.06.2012**

(86) International application number:
**PCT/JP2012/003973**

(87) International publication number:
**WO 2012/176429 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2011 JP 2011139670**
**01.02.2012 JP 2012020340**

(71) Applicant: **Toyo Seikan Group Holdings, Ltd.**
**Shinagawa-ku,**
**Tokyo 1418627 (JP)**

(72) Inventors:
• **YUASA, Yoshiyuki**
**Yokohama-shi**
**Kanagawa 240-0062 (JP)**
• **WASHIZAKI, Toshirou**
**Yokohama-shi**
**Kanagawa 240-0062 (JP)**

(74) Representative: **Liebetanz, Michael**
**Isler & Pedrazzini AG**
**Gotthardstrasse 53**
**Postfach 1772**
**8027 Zürich (CH)**

(54) **STRUCTURE, STRUCTURE-FORMING METHOD, AND STRUCTURE-FORMING DEVICE**

(57) Structural color generation in any region can be visually recognized when a structure is seen from any angle so that a decorative effect attributed to the structural color generation is improved.

A structure 10 has a processed part 14 formed by the occurrence of photodisintegration attributed to the application of pulsed laser light. A fine periodic composition in which a plurality of processed parts 14 are arranged in the form of grid cross points is formed in one region 11 of the structure 10. A large number of regions 11 are arranged in the structure 10. Each of a plurality of ranges obtained by the division of a surface in which the regions 11 are arranged is a region-forming range 16. One or more regions 11 are arranged in one region-forming range 16. The arrangement directions of the processed parts 14 formed in each of a large number of regions 11 vary according to the region-forming ranges 16.

FIG.1

# Description

## Technical Field

The present invention relates to a structure having a light control function that uses optical phenomena such as diffraction and interference, a method of forming this structure, and a structure-forming device to perform the forming method. More particularly, it relates to a structure which develops a structural color by a composition having a large number of periodically arranged fine depressions, a structure-forming method, and a structure-forming device.

## Background Art

Color generation includes chemical color generation that uses pigment substances, and structural color generation which generates a color by phenomena such as light diffraction and interference resulting from the formation of a fine composition.

The latter structural color generation is caused by, for example, thin film interference, multilayer film interference, a light scattering phenomenon, diffraction grating, and photonic crystal.

However, artificial development of such a structural color is difficult, and there are only a few examples of its industrial practical applications.

Under these circumstances, the inventor of the present application formed a fine periodic composition by light irradiation and found out a method of forming a structure which developed a structural color after dedication to researches, and then filed a patent application (e.g. see Patent Literature 1).

More specifically, according to this structure-forming method, laser light is applied to a structure having a laminated construction to form an uneven fine periodic composition on the surface or interface of the structure.

The fine periodic composition has a large number of fine depressions or projections that are periodically arranged vertically and horizontally. This fine periodic composition develops a structural color.

## Citation List

## Patent Literature

Patent Literature 1: Japanese Patent Publication Laid-open No. 2010-030279

## Summary of Invention

## Technical Problem

However, the above-mentioned technique according to Patent Literature 1 has been under the following situation.

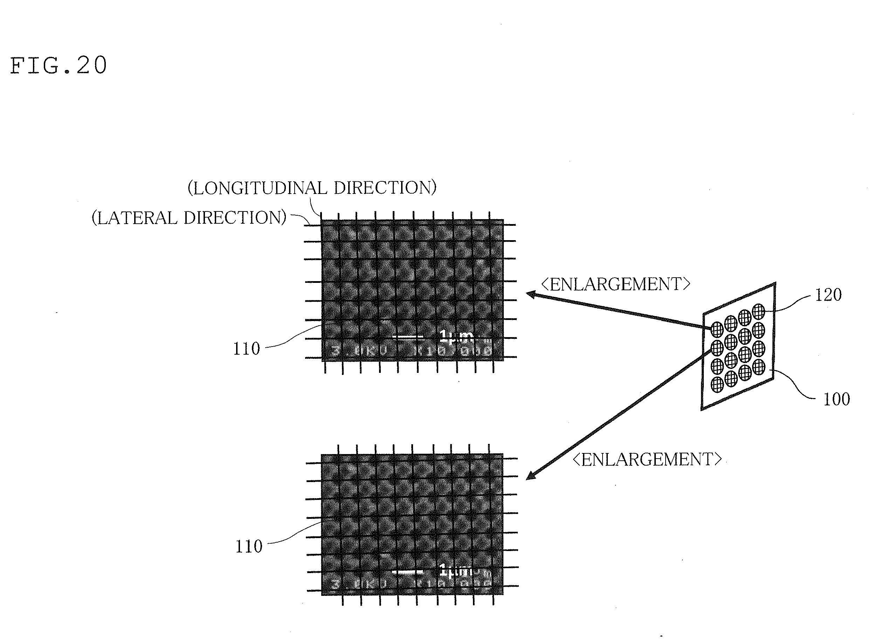

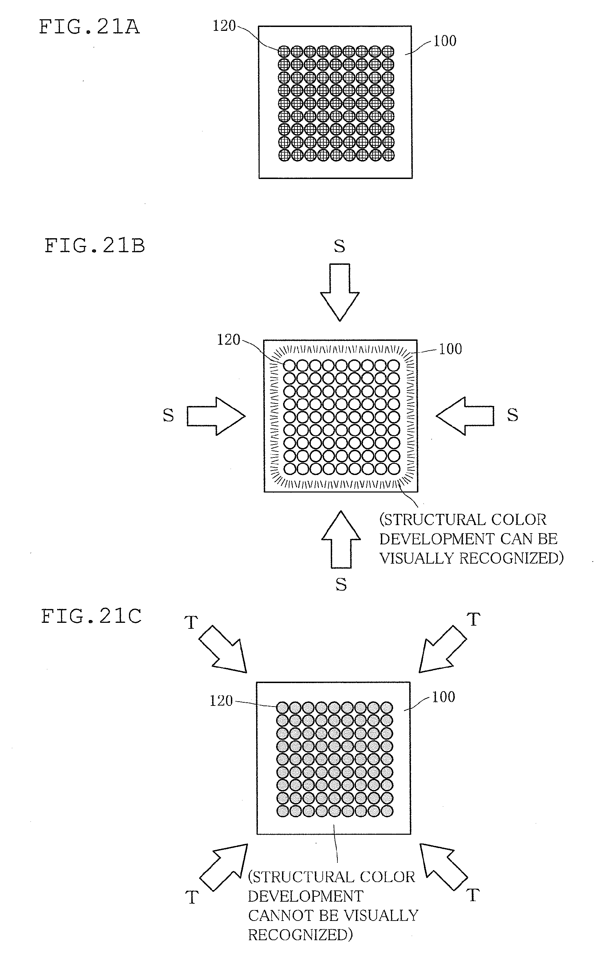

For example, the technique according to this literature is designed to form an uneven fine periodic composition on the surface or interface of a structure. However, as shown in FIG. 20, the fine periodic composition has a large number of fine depressions 110 that are periodically arranged vertically and horizontally. While a plurality of regions 120 in which fine periodic compositions are formed are arranged in a structure 100, all the depressions 110 are arranged in the same vertical and horizontal directions in each of the regions 120, as shown in FIG. 20 and FIG. 21A. It should be noted that in FIG. 21A, grid lines indicated in each of the regions 120 represent the arrangement direction of the depressions 110.

Therefore, for example, when the surface of the structure 100 is seen from the vertical direction or horizontal direction (S-direction shown in FIG. 21 B) in which the depressions 110 are periodically arranged, structural color development can be visually recognized. However, when the surface of the structure 100 is seen from other directions such as a T-direction shown in FIG. 21C, the structural color generation cannot be visually recognized.

This is because structural color development by a fine periodic composition requires that the depressions 110 be periodically arranged with a distance close to a visible light wavelength (about 400 nm to 700 nm), and the structural color is developed in this arrangement direction. Therefore, for example, when the surface of the structure 100 is seen from the S-direction shown in FIG. 21 B, the structural color generation can be visually recognized because the depressions 110 are periodically arranged with a distance close to the visible light wavelength. In contrast, when the surface of the structure 100 is seen from the T-direction shown in FIG. 21C, the structural color generation cannot be visually recognized because the depressions 110 are not arranged with a distance close to the visible light wavelength.

That is, in the conventional structure 100, the angles in which structural color generation can be visually recognized are limited, and the structural color generation cannot be visually recognized from other angles. This leads to a situation where even if a fine periodic composition is formed in the structure 100 for decoration, the effects of the decoration are deteriorated.

The present invention has been made in view of the forgoing circumstances. An objection of the present invention is to provide a structure, a structure-forming method, and a structure-forming device which enable structural color generation in any region to be visually recognized when the structure is seen from any angle, thereby permitting an improvement in the effect of decoration attributed to the structural color generation.

## Solution to Problem

To achieve the above object, a structure according to the present invention has a processed part formed by the occurrence of photodisintegration attributed to the application of pulsed laser light, wherein a fine periodic composition in which a plurality of processed parts are arranged in the form of grid cross points is formed in one region of the structure, a large number of regions are arranged in the structure, each of a plurality of ranges obtained by the division of a surface in which the regions are arranged is a region-forming range, one or more regions are arranged in one region-forming range, and the arrangement directions of the processed parts formed in each of the large number of regions vary according to the region-forming ranges.

A structure-forming method according to the present invention forms, in a structure, a fine periodic composition in which processed parts formed by the occurrence of photodisintegration attributed to the application of pulsed laser light are arranged in the form of grid cross points, wherein a laser oscillator outputs laser light, a beam splitter splits the laser light into a plurality of light fluxes, a lens causes interference of the light fluxes and then applies the light fluxes to the structure to form the fine periodic composition, and when the fine periodic compositions are formed in a plurality of regions in the structure, the angle of the beam splitter is changed for each of the regions or for each of the adjacent regions, and the direction of the interference of the light fluxes is changed to form the fine periodic compositions.

A structure-forming method according to the present invention forms, in a structure, a fine periodic composition in which processed parts formed by the occurrence of photodisintegration attributed to the application of pulsed laser light are arranged in the form of grid cross points, wherein a laser oscillator outputs laser light, a laser scanner reflects the laser light and then propagates the laser light toward a beam splitter having a plurality of diffraction optical elements different in splitting angle, the diffraction optical element which has received the laser light among the diffraction optical elements of the beam splitter splits the laser light into a plurality of light fluxes, a lens causes interference of the light fluxes and then applies the light fluxes to the structure to form the fine periodic composition, and when the fine periodic compositions are formed in a large number of regions in the structure, the laser scanner changes the reflection angle of the laser light so that the diffraction optical element to receive the laser light is switched between the formation of the fine periodic compositions in the adjacent regions among the large number of regions and the formation of the fine periodic compositions in the other regions.

A structure-forming device according to the present invention applies pulsed laser light to a structure to form, in the structure, a fine periodic composition in which processed parts formed by the occurrence of photodisintegration are arranged in the form of grid cross points. The structure-forming device includes a laser oscillator which outputs laser light, a beam splitter which splits the laser light into a plurality of light fluxes and which is rotated or turned around a traveling direction of the laser light, a lens which causes interference of the light fluxes and then applies the light fluxes to the structure to form the fine periodic composition, and angle adjusting means for changing the angle of the beam splitter whenever the fine periodic composition is formed in any of a plurality of regions in the structure during the formation of the fine periodic compositions in the regions.

A structure-forming device according to the present invention applies pulsed laser light to a structure to form, in the structure, a fine periodic composition in which processed parts formed by the occurrence of photodisintegration are arranged in the form of grid cross points. The structure-forming device includes a laser oscillator which outputs laser light, a laser scanner which reflects the laser light, a beam splitter which receives the laser light reflected by the laser scanner and then splits the laser light into a plurality of light fluxes, and a lens which causes interference of the light fluxes and then applies the light fluxes to the structure to form the fine periodic composition. The beam splitter has a plurality of diffraction optical elements different in splitting angle. The laser scanner changes the reflection angle of the laser light so that the diffraction optical element to receive the laser light is switched between the formation of the fine periodic compositions in adjacent regions among a large number of regions in the structure and the formation of the fine periodic compositions in the other regions.

Advantageous Effects of Invention

According to a structure, a structure-forming method, and a structure-forming device of the present invention, the arrangement directions (the directions of grids in processed parts arranged in the form of grid cross points) of a plurality of processed parts constituting a fine periodic composition vary according to region-forming ranges in which one or more regions are arranged. Therefore, structural color generation in any region can be visually recognized when the structure is seen from any angle.

If the direction to see the structure is changed, the region where the structural color generation can be visually recognized changes, so that brilliant decorative expressions can be obtained, and the effect of the decoration can be improved.

Brief Description of Drawings

FIG. 1 represents an external perspective view and SEM observation images (enlarged essential part views) showing the configurations of a structure and processed parts (fine periodic compositions) according to a first embodiment of the present invention;

FIG. 2A is a front view showing the configuration of the structure according to the first embodiment of the present invention;

FIG. 2B is a front view showing structural color generation in each region when the structure shown in FIG. 2A is seen from an S-direction;

FIG. 2C is a front view showing structural color generation in each region when the structure shown in FIG. 2A is seen from a T-direction;

FIG. 3 represents an external perspective view and SEM observation images (enlarged essential part views) showing the configurations of a structure and processed parts (fine periodic compositions) according to a second embodiment of the present invention;

FIG. 4A is a front view showing the configuration of the structure according to the second embodiment of the present invention;

FIG. 4B is a front view showing structural color generation in each region when the structure shown in FIG. 4A is seen from an S-direction;

FIG. 4C is a front view showing structural color generation in each region when the structure shown in FIG. 4A is seen from a T-direction;

FIG. 5A is a diagram showing a structure in which fine periodic compositions are formed in a large-sized region, wherein (i) is a schematic view showing the arrangement of regions in the structure and the arrangement directions of processed parts formed in the regions, and (ii) is a perspective image showing the externals of the structure;

FIG. 5B is a diagram showing a structure in which fine periodic compositions are formed in a large-sized region, wherein (i) is a schematic view showing the arrangement of regions in the structure and the arrangement directions of processed parts formed in the regions, and (ii) is a perspective image showing the externals of the structure;

FIG. 6 is a diagram showing a structure in which the shape of a range (region-forming range) having a plurality of regions constituting one region group formed by a plurality of adjacent regions is foursquare and in which fine periodic compositions are formed so that the arrangement directions of processed parts vary according to region groups, wherein (i) is a schematic view showing the arrangement of the regions in the structure and the shape of the region-forming range, and (ii) is a perspective image showing the externals of the structure;

FIG. 7 is a diagram showing a structure in which the shape of a region-forming range is circular, wherein (i) is a schematic view showing the arrangement of regions in the structure and the shape of the region-forming range, and (ii) is a perspective image showing the externals of the structure;

FIG. 8 is a diagram showing a structure in which the shape of a region-forming range is starlike, wherein (i) is a schematic view showing the arrangement of regions in the structure and the shape of the region-forming range, and (ii) is a perspective image showing the externals of the structure;

FIG. 9A is a sectional view showing the configuration of depressions in the thickness direction of the structure;

FIG. 9B is a sectional view showing the configuration of cavities in the thickness direction of the structure;

FIG. 9C is a sectional view showing another configuration of cavities in the thickness direction of the structure;

FIG. 9D is a sectional view showing yet another configuration of cavities in the thickness direction of the structure;

FIG. 10 is a schematic perspective view showing the configuration of a structure-forming device according to an embodiment of the present invention;

FIG. 11 represents schematic views of grid patterns of a beam splitter, schematic views showing the positions where a split light flux passes through a lens in accordance with the grid pattern of the beam splitter, and SEM observation images (enlarged essential part views) showing grid patterns of processed parts formed in accordance with the grid patterns of the beam splitter;

FIG. 12 is a top view showing the configuration of a rotation mechanism of the beam splitter;

FIG. 13 is a schematic perspective view showing another configuration of the structure-forming device according to the embodiment of the present invention;

FIG. 14 is a front view showing the configuration of the beam splitter;

FIG. 15A represents an external perspective view and an SEM observation image (enlarged essential part view) showing the configuration of the structure-forming device, the track of a light flux, and the arrangement direction of a processed part when the inclination angle of the beam splitter is perpendicular;

FIG. 15B represents an external perspective view and an SEM observation image (enlarged essential part view) showing the configuration of the structure-forming device, the track of a light flux, and the arrangement direction of a processed part when the inclination angle of the beam splitter is an oblique angle of 45 degrees;

FIG. 15C represents an external perspective view and an SEM observation image (enlarged essential part view) showing the configuration of the structure-forming device, the track of a light flux, and the arrangement direction of a processed part when the inclination angle of the beam splitter is 90 degrees;

FIG. 16 is a diagram showing an interference region of a plurality of light fluxes;

FIG. 17A represents an external perspective view and an SEM observation image (enlarged essential part view) showing the track of a light flux and the arrangement direction of a processed part formed in the structure in the structure-forming device when laser light is applied to a first diffraction optical element of the beam splitter;

FIG. 17B represents an external perspective view and an SEM observation image (enlarged essential part view) showing the track of a light flux and the arrangement direction of a processed part formed in the structure in the structure-forming device when laser light is applied to a second diffraction optical element of the beam splitter;

FIG. 17C represents an external perspective view and an SEM observation image (enlarged essential part view) showing the track of a light flux and the arrangement direction of a processed part formed in the structure in the structure-forming device when laser light is applied to a third diffraction optical element of the beam splitter;

FIG. 17D represents an external perspective view and an SEM observation image (enlarged essential part view) showing the track of a light flux and the arrangement direction of a processed part formed in the structure in the structure-forming device when laser light is applied to a fourth diffraction optical element of the beam splitter;

FIG. 18A represents a perspective image (i) of a structure according to a first example of the present invention when seen from an s-direction, a perspective image (ii) of the structure according to the first example of the present invention when seen from a t-direction, and a schematic view (iii) showing the directions to see the structure;

FIG. 18B is a perspective image (i) of a structure according to a first comparative example when seen from the s-direction, and a perspective image (ii) of the structure according to the first comparative example when seen from the t-direction;

FIG. 19 is a diagram showing a structure according to a second example of the present invention, wherein (i) is a schematic view showing the arrangement of regions, and (ii) is a perspective image showing the externals of the structure;

FIG. 20 represents an external perspective view and SEM observation images (enlarged essential part views) showing the configurations of a conventional structure and a processed part (fine periodic composition);

FIG. 21A is a front view showing the configuration of the conventional structure;

FIG. 21B is a front view showing structural color generation in each region when the structure shown in FIG. 21A is seen from an S-direction; and

FIG. 21C is a front view showing structural color generation in each region when the structure shown in FIG. 21A is seen from a T-direction.

Description of Embodiments

Hereinafter, preferred embodiments of a structure, a structure-forming method, and a structure-forming device according to the present invention will be described with reference to the drawings.

The embodiments are described in connection with the following paragraphs.

    (1) Structure
    (2) Structure-forming device
    (3) Structure-forming method
    (4) Examples

(1) Structure

(1-1) First Embodiment of Structure

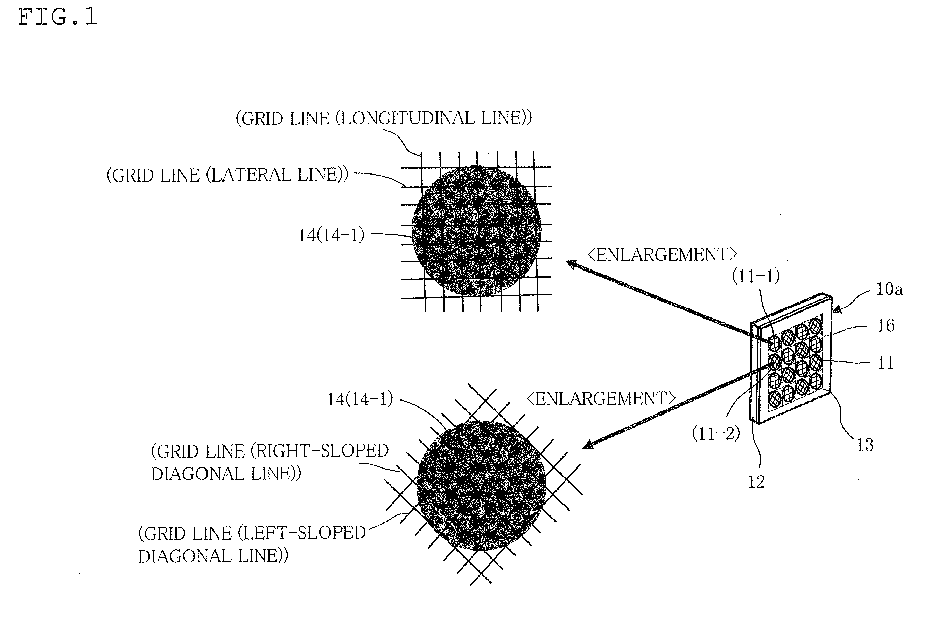

A first embodiment of a structure is described with reference to FIG. 1.

FIG. 1 represents an external perspective view showing the construction of a structure according to the present embodiment, and SEM observation images (enlarged essential part views) of fine periodic compositions formed in the structure.

As shown in FIG. 1, a structure 10a includes a plurality of regions (periodic composition forming regions) 11 having fine periodic compositions arranged in a coating 13 which is provided in the surface of a base material 12.

The fine periodic composition refers to a composition in which processed parts 14 formed by the occurrence of photodisintegration attributed to the application of pulsed laser light are arranged in the form of grid cross points.

The distance between the processed parts 14 is close to a visible light wavelength (about 400 nm to 700 nm). A large number of such processed parts 14 are periodically arranged, so that light is diffracted, and light interference attributed to an optical path difference is caused in a part (projection) between one processed part 14 and the adjacent processed part 14. As a result, a structural color is developed.

Although the processed parts 14 include a depression 14-1 and a cavity 14-2, details will be described later.

The fine periodic composition is formed in a surface 17 of the coating 13 or in a given internal range by the use of a laser light irradiation device (structure-forming device 20, described later). A range in which the fine periodic composition is formed by the application of a pulse of laser light is referred to as the region 11 when the coating 13 is seen from the direction of the laser light application.

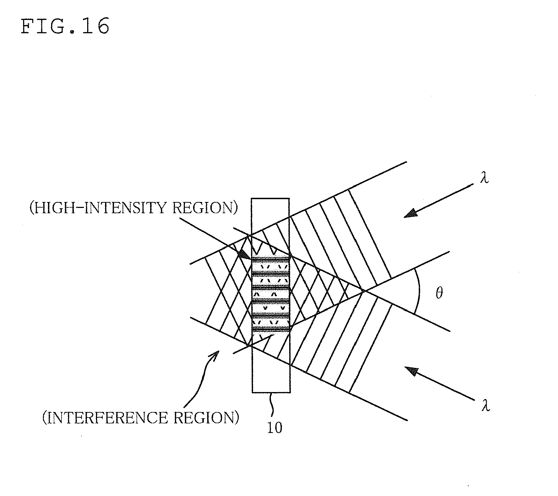

To be exact, this region 11 refers to a formation range of the fine periodic composition formed in the coating 13 by the distribution of a high-intensity region in a spatial region (interference region) in which a plurality of light fluxes are crossed at one point and interfere with each other (see FIG. 16). That is, when there are a plurality of spatial regions in which a plurality of light fluxes cross at one point and interfere with each other, a fine periodic composition is formed in each of the spatial regions within a given range. Each of the formation ranges of the fine periodic compositions formed in the spatial regions is the region 11.

A plurality of regions 11 are arranged in the structure 10a. For example, the regions 11 are arranged in 16 places in the structure 10a shown in FIG. 1.

While the processed parts 14 are arranged and formed in the form of grid cross points in each of the regions 11, the directions of the grids (the arrangement directions of the processed parts 14) vary according to the regions 11.

For example, as shown in FIG. 1, the processed part 14 formed in one region 11-1 is formed at a position corresponding to each cross point of the grid which is composed of a plurality of parallel horizontal lateral lines (grid lines) and a plurality of parallel longitudinal lines (grid lines) that cross substantially at right angles with the lateral lines. A plurality of processed parts 14 are then formed in the form of grid cross points all over the region 11 along the lateral lines and the longitudinal lines.

The processed part 14 formed in another region 11-2 is formed at a position corresponding to each cross point of the grid which is composed of a plurality of parallel right-sloped diagonal lines (grid lines) and a plurality of parallel left-sloped diagonal lines (grid lines) that cross substantially at right angles with the right-sloped diagonal lines. A plurality of processed parts 14 are then formed in the form of grid cross points all over the region 11 along the right-sloped diagonal lines and the left-sloped diagonal lines.

Thus, the arrangement directions (the direction of the grids) of the processed parts 14 arranged and formed in the form of grid cross points vary according to the regions 11, so that structural color generation in any of the regions 11 can be visually recognized when the structure 10a is seen from any direction.

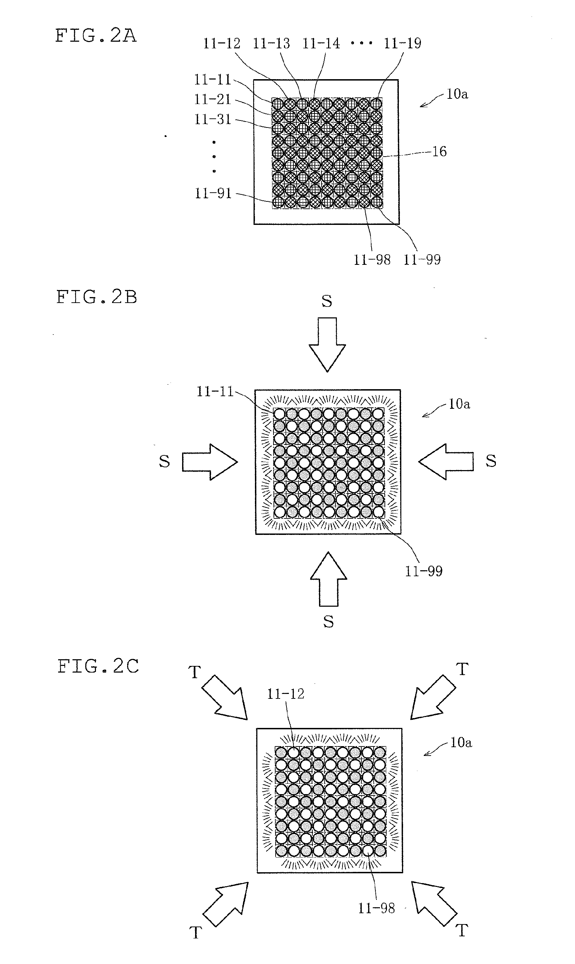

For example, 81 regions 11 (11-11 to 11-99) are arranged in the structure 10a shown in FIG. 2A. In each of the regions 11, a fine periodic composition in which a plurality of processed parts 14 are arranged in the form of grid cross points is formed. The arrangement directions of the processed parts 14 vary according to the regions 11. In FIG. 2A, the grid lines shown in each of the regions 11 indicate the directions of the grids, that is, the arrangement directions of the processed parts 14.

The arrangement direction of the processed parts 14 can be any direction (any inclination) as described later. However, for simplicity of explanation, the arrangement directions of the processed parts 14 include two kinds of directions in FIG. 2A: a longitudinal/lateral direction (having an inclination of 0 degrees) and a diagonal direction having an inclination of 45 degrees. More specifically, the arrangement direction of the processed parts 14 in the regions 11-11, 11-13, 11-15, 11-17, 11-19, 11-22, 11-24, ..., 11-99 is the longitudinal/lateral direction. The arrangement direction of the processed parts 14 in the regions 11-12, 11-14, 11-16, 11-18, 11-21, 11-23, ..., 11-98 is the diagonal direction having an inclination of 45 degrees. It should be noted that some of the reference numbers shown here are not illustrated in FIG.

2A to avoid the unclarity of FIG. 2A.

Here, when the structure 10a shown in FIG. 2A is seen from an S-direction shown in FIG. 2B (extending in the longitudinal/lateral direction (having an inclination of 0 degrees) which is the arrangement direction of the processed parts 14 in the region 11-11 and others), structural color generation in the regions 11-11, 11-13, 11-15, 11-17, 11-19, 11-22, 11-24, ..., 11-99 can be visually recognized.

When the structure 10a shown in FIG. 2A is seen from a T-direction shown in FIG. 2C (extending in the diagonal direction having an inclination of 45 degrees which is the arrangement direction of the processed parts 14 in the region 11-12 and others), structural color generation in the regions 11-12, 11-14, 11-16, 11-18, 11-21, 11-23, ..., 11-98 can be visually recognized.

Thus, structural color generation in any of the regions 11 can be visually recognized when the structure 10a shown in FIG. 2A is seen from both the S-direction and T-direction.

In FIG. 2A to FIG. 2C, for simplicity of explanation, the arrangement directions of the processed parts 14 include two kinds of directions (the longitudinal/lateral direction having an inclination of 0 degrees and the diagonal direction having an inclination of 45 degrees). However, the arrangement directions of the processed parts 14 are not limited to these two kinds of directions, and can be three or more kinds of directions. For example, the arrangement directions of the processed parts 14 can be three or more kinds of directions: a longitudinal/lateral direction having an inclination of 0 degrees, a diagonal direction having an inclination of 30 degrees, and a diagonal direction having an inclination of 60 degrees. If the inclination (angle) of the arrangement direction of the processed parts 14 is increased in this way, the angle at which structural color generation can be visually recognized can be increased.

Furthermore, if the direction to see the structure 10a is changed, the region 11 in which structural color generation can be seen changes. For example, the region 11 in which structural color generation can be visually recognized when seen from the S-direction as shown in FIG. 2B is different from the region 11 in which structural color generation can be visually recognized when seen from the T-direction as shown in FIG. 2C. This fact is used so that the inclination of the arrangement direction of the processed parts 14 is changed little by little for each of the regions 11; for example, the arrangement direction of the processed parts 14 in one region 11 is a longitudinal/lateral direction having an inclination of 0 degrees, the arrangement direction of the processed parts 14 in the adjacent region 11 is a diagonal direction having an inclination of 15 degrees, and the arrangement direction of the processed parts 14 in the further adjacent region 11 is a diagonal direction having an inclination of 30 degrees. When the direction to see the structure 10a is thereby changed little by little, the region 11 in which structural color generation can be visually recognized gradually changes, and flowing decorative expressions can be obtained. Moreover, if many places in which the inclination of the arrangement direction of the processed parts 14 is changed little by little for each of the regions 11 are formed on the structure 10a, brilliant decorative expressions can be obtained.

In FIG. 2A, the region 11 in which the inclination of the arrangement direction of the processed parts 14 is 0 degrees and the region 11 in which the inclination of the arrangement direction of the processed parts 14 is 45 degrees are alternately arranged. However, these regions 11 are not exclusively alternately arranged, and can be randomly arranged. In particular, when there are a plurality of kinds of arrangement directions of the processed parts 14 and these arrangement directions are randomly arranged, structural color generation in unspecified regions 11 can be visually recognized when the structure 10a is seen. In addition, when the direction to see the structure 10a is changed little by little, the regions 11 in which structural color generation can be visually recognized changes by turns, and a large number of regions 11 look as if these regions compete to sequentially generate a structural color. Thus, brilliant decorative expressions can be obtained.

In the present embodiment described, the arrangement directions of the processed parts 14 vary according to the regions 11. In contrast, in the structure 10a, each of a plurality of ranges obtained by the division of a surface in which the regions 11 are arranged is a region-forming range 16, and one region 11 is disposed in each region-forming range 16. Then the arrangement directions of the processed parts 14 formed in each of a large number of regions 11 in the structure 10a vary according to the region-forming ranges 16 (see FIG. 1 and FIG. 2A).

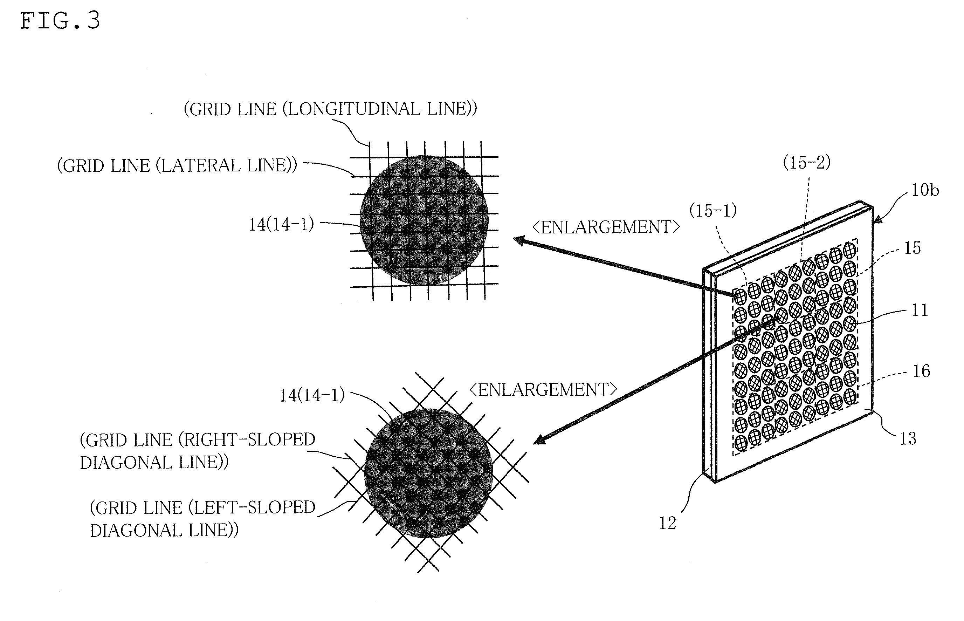

The grid lines are provided in the SEM observation images shown in FIG. 1 to explain that the processed parts 14 are formed in the form of grid cross points. This does not mean that the grid lines are formed together with the formation of the processed parts 14. This also applies to FIG. 3, FIG. 11, FIG. 15A to FIG. 15C, FIG. 17A to FIG. 17D, and FIG. 20.

(1-2) Second Embodiment of Structure

Now, a second embodiment of a structure is described with reference to FIG. 3.

The structure 10a described in "(1-1) First Embodiment of Structure" is characterized in that the arrangement directions of the processed parts 14 vary according to the regions 11 as shown in FIG. 1. That is, the arrangement direction of the processed parts 14 formed in one region 11 and the arrangement direction of the processed parts 14 formed in the adjacent region 11 are different when compared to each other.

In contrast, a structure 10b according to the present embodiment is characterized in that the arrangement directions of the processed parts 14 vary according to the regions 11. That is, the structure 10b according to the present embodiment is characterized in that the adjacent regions 11 constitute one region group 15, and the arrangement direction of the processed parts 14 formed in each of the regions 11 constituting the one region group 15 and the arrangement direction of the processed parts 14 formed in each of the regions 11 constituting the adjacent region group 15 vary according to the region groups 15 when compared to each other.

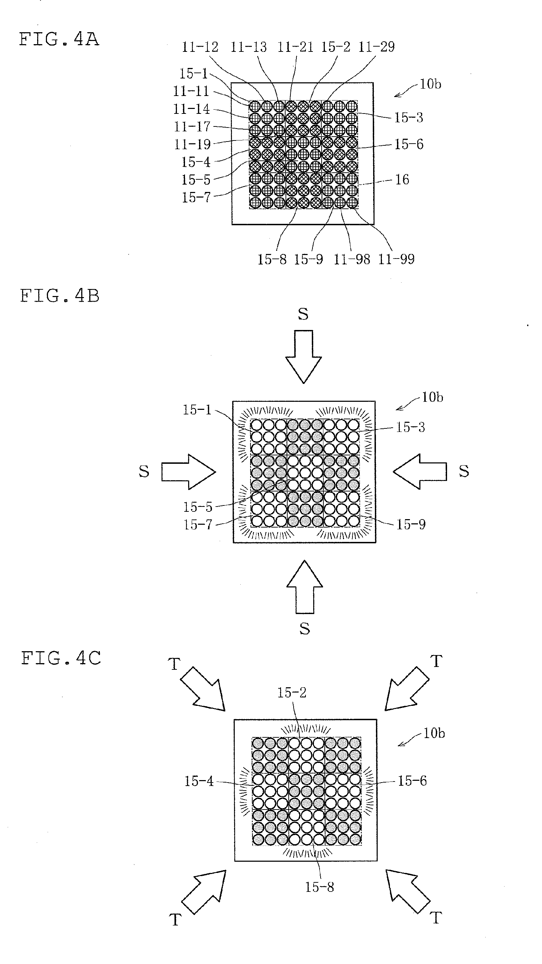

For example, as shown in FIG. 3 and FIG. 4A, the processed part 14 formed in each of a plurality of regions 11-11 to 11-19 constituting one region group 15-1 is formed at a position corresponding to each cross point of the grid which is composed of a plurality of parallel horizontal lateral lines (grid lines) and a plurality of parallel longitudinal lines (grid lines) that cross at right angles with the lateral lines. A plurality of processed parts 14 are then formed in the form of grid cross points all over the regions 11-11 to 11-19 along the lateral lines and the longitudinal lines.

The processed part 14 formed in each of a plurality of regions 11-21 to 11-29 constituting another region 15-2 is formed at a position corresponding to each cross point of the grid which is composed of a plurality of parallel right-sloped diagonal lines (grid lines) and a plurality of parallel left-sloped diagonal lines (grid lines) that cross at right angles with the right-sloped diagonal lines. A plurality of processed parts 14 are then formed in the form of grid cross points all over the regions 11-21 to 11-29 along the right-sloped diagonal lines and the left-sloped diagonal lines.

That is, in a plurality of regions 11 constituting one region group 15, the arrangement direction of the formed processed parts 14 is the same. The arrangement direction (the direction of the grid) of the processed parts 14 formed in a plurality of regions 11 constituting one region group 15 and the arrangement direction (the direction of the grid) of the processed parts 14 formed in a plurality of regions 11 constituting the adjacent region group 15 are different when compared to each other.

Thus, the arrangement directions (the direction of the grid) of the processed parts 14 vary according to the region group 15, so that structural color generation in any of the region groups 15 can be visually recognized when the structure 10b is seen from any direction.

For example, the regions 11 (11-11 to 11-19, 11-21 to 11-29, ..., 11-91 to 11-99) are arranged at 81 places in the structure 10b shown in FIG. 4A. In each of the regions 11, a fine periodic composition in which a plurality of processed parts 14 are arranged in the form of grid cross points is formed. The arrangement directions of the processed parts 14 vary according to the region groups 15. In FIG. 4A, the grid lines shown in each of the regions 11 indicate the directions of the grids, that is, the arrangement directions of the processed parts 14.

The arrangement direction of the processed parts 14 can be any direction as described later. However, for simplicity of explanation, the arrangement directions of the processed parts 14 include two kinds of directions in FIG. 4A: a longitudinal/lateral direction (having an inclination of 0 degrees) and a diagonal direction having an inclination of 45 degrees. More specifically, the arrangement direction of the processed parts 14 in the regions 11-11 to 11-19, 11-31 to 11-39, 11-51 to 11-59, 11-71 to 11-79, and 11-91 to 11-99 constituting the region groups 15-1, 15-3, 15-5, 15-7, and 15-9 is the longitudinal/lateral direction. The arrangement direction of the processed parts 14 in the regions 11-21 to 11-29, 11-41 to 11-49, 11-61 to 11-69, and 11-81 to 11-89 constituting the region groups 15-2, 15-4, 15-6, and 15-8 is the diagonal direction (having an inclination of 45 degrees). It should be noted that some of the reference numbers shown here are not illustrated in FIG. 4A to avoid the unclarity of FIG. 4A.

Here, when the structure 10b shown in FIG. 4A is seen from an S-direction shown in FIG. 4B (extending in the longitudinal/lateral direction (having an inclination of 0 degrees) which is the arrangement direction of the processed parts 14 in the region 11-11 and others), structural color generation in each of the regions 11 constituting the region groups 15-1, 15-3, 15-5, 15-7, and 15-9 can be visually recognized.

When the structure 10b shown in FIG. 4A is seen from a T-direction shown in FIG. 4C (extending in the diagonal direction having an inclination of 45 degrees which is the arrangement direction of the processed parts 14 in the region 11-21 and others), structural color generation in each of the regions 11 constituting the region groups 15-2, 15-4, 15-6, and 15-8 can be visually recognized.

Thus, the structural color developed by the region 11 in any of the region groups 15 can be visually recognized when the structure 10b shown in FIG. 4A is seen from both the S-direction and T-direction.

In FIG. 4A to FIG. 4C, the arrangement directions of the processed parts 14 include two kinds of directions (the longitudinal/lateral direction having an inclination of 0 degrees and the diagonal direction having an inclination of 45 degrees) for simplicity of explanation. However, the arrangement directions of the processed parts 14 are not limited to these two kinds of directions, and can be three or more kinds of directions. For example, the arrangement directions of the processed parts 14 can be three or more kinds of directions: a longitudinal/lateral direction having an inclination of 0 degrees, a diagonal direction having an inclination of 30 degrees, and a diagonal direction having an inclination of 60 degrees. If the inclination (angle) of the arrangement direction of the processed parts 14 is increased in this way, the angle at which structural color generation can be visually recognized can be increased.

Furthermore, if the direction to see the structure 10b is changed, the region group 15 in which structural color generation can be seen changes. For example, the region group 15 in which structural color generation can be visually recognized when seen from the S-direction as shown in FIG. 4B is different from the region group 15 in which structural color generation can be visually recognized when seen from the T-direction as shown in FIG. 4C. This fact is used so that the inclination of the arrangement direction of the processed parts 14 is changed little by little for each of the region groups 15; for example, the arrangement direction of the processed parts 14 in each of the regions 11 constituting one region group 15 is a longitudinal/lateral direction having an inclination of 0 degrees, the arrangement direction of the processed parts 14 in each of the regions 11 constituting the adjacent region group 15 is a diagonal direction having an inclination of 15 degrees, and the arrangement direction of the processed parts 14 in each of the regions 11 constituting the further adjacent region group 15 is a diagonal direction having an inclination of 30 degrees. When the direction to see the structure 10b is thereby changed little by little, the region group 15 in which structural color generation can be visually recognized gradually changes, and flowing decorative expressions can be obtained. Moreover, if many places in which the inclination of the arrangement direction of the processed parts 14 is changed little by little for each of the region groups 15 are formed on the structure 10b, brilliant decorative expressions can be obtained.

In FIG. 4A, the region group 15 in which the inclination of the arrangement direction of the processed parts 14 is 0 degrees and the region group 15 in which the inclination of the arrangement direction of the processed parts 14 is 45 degrees are alternately arranged. However, these region groups 15 are not exclusively alternately arranged, and can be randomly arranged. In particular, when there are a plurality of kinds of arrangement directions of the processed parts 14 and these arrangement directions are randomly arranged, structural color generation in unspecified region groups 15 can be visually recognized when the structure 10b is seen. In addition, when the direction to see the structure 10b is changed little by little, the region groups 15 in which structural color generation can be visually recognized changes by turns, and a large number of region groups 15 look as if these region groups compete to sequentially generate a structural color. Thus, brilliant decorative expressions can be obtained.

In the present embodiment described, the arrangement directions of the processed parts 14 vary according to the regions 11. In contrast, in the structure 10b, each of a plurality of ranges obtained by the division of a surface in which the regions 11 are arranged is a region-forming range 16, and a plurality of regions 11 are disposed in each region-forming range 16. Then the arrangement directions of the processed parts 14 formed in a large number of regions 11 in the structure 10b vary according to the region-forming ranges 16 (see FIG. 3 and FIG. 4A).

(1-3) Region Size and Decorative Expressions

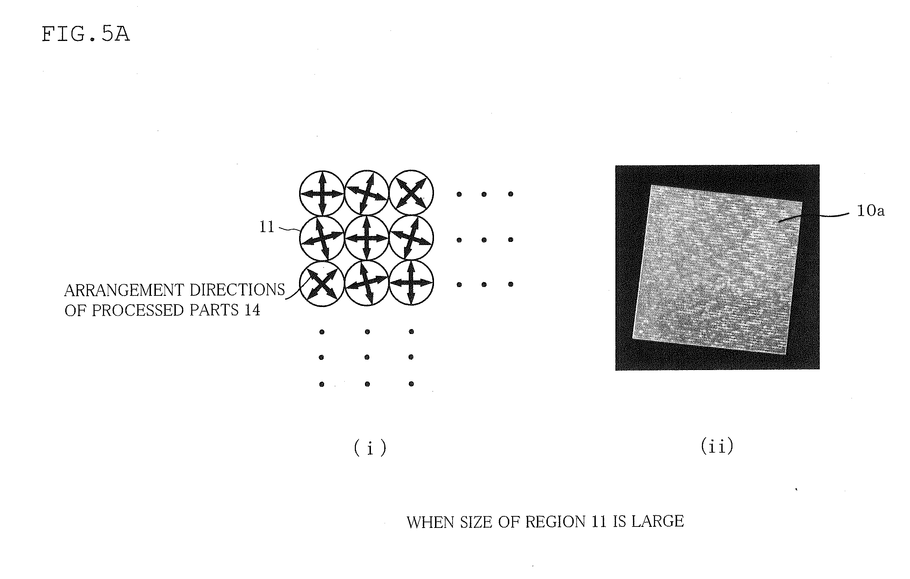

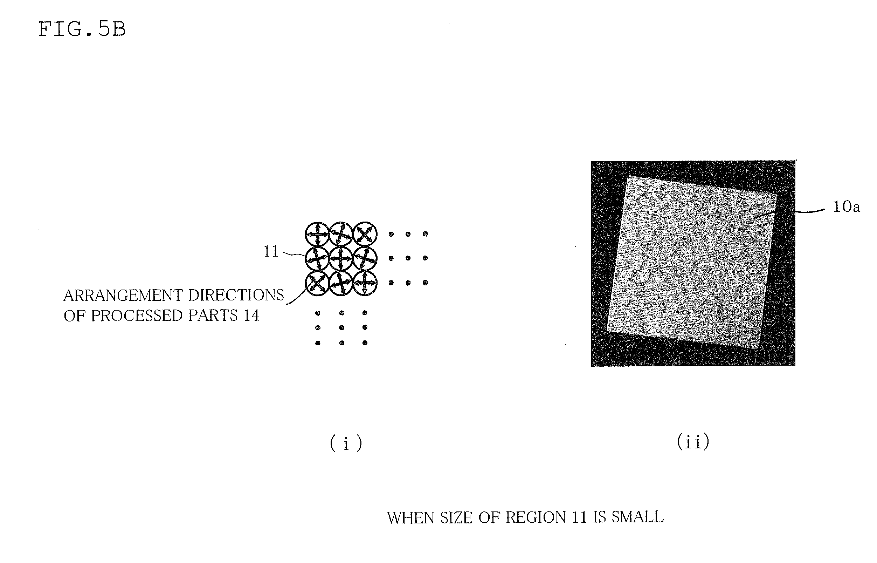

Now, the relation between the region size and the decorative expressions is described with reference to FIG. 5A (i) and (ii) and FIG. 5B (i) and (ii).

As described above, the region 11 refers to a range in which the fine periodic composition is formed in the coating 13 by the application of a pulse of laser light. The size of this region 11 (i.e. the diameter of the region 11) varies depending on the energy of the laser light. For example, when the energy of the laser light is small, the size of the region 11 is small. On the other hand, when the energy of the laser light is great, the size of the region 11 is large.

Thus, the size of the region 11 can be changed by the change of the energy of the laser light. There are advantages and disadvantages depending on the difference of the size of the region 11 as below.

For example, the repetition frequency of the laser light output from a laser oscillator 21 (described later) can be higher when a small-sized region 11 is formed than when a large-sized region 11 is formed. This is because the energy of the laser light to form the small-sized region 11 is smaller than the energy of the laser light to form the large-sized region 11. When the repetition frequency of the laser light is high, fine periodic compositions can be rapidly formed in a large number of regions 15. For example, as shown in FIG. 5A (i) and (ii) and FIG. 5B (i) and (ii), fine periodic compositions are formed so that a large number of regions 11 are arranged in matrix form all over the surface of the coating 13, and the structure 10a according to the first embodiment is thereby obtained. In this case, the processing speed can be higher when the regions 11 are small in size (FIG. 5B (i) and (ii)) than when the regions 11 are large in size (FIG. 5A (i) and (ii)).

The effect of decoration also varies. For example, the structure 10a (the structure 10a having the large-sized regions 11) shown in FIG. 5A(i) and (ii) has a high brilliant impression and is high in decorative effect because the color generation in each of the regions 11 appears enhanced. In the meantime, the structure 10a (the structure 10a having the small-sized regions 11) shown in FIG. 5B (i) and (ii) has a low brilliant impression and is low in decorative effect because color generation in each of the regions 11 appears weak. Thus, from the point of view of the decorative effect, the regions 11 can be said to be better when large in size.

To sum up, when the small-sized regions 11 are formed, the processing speed can be higher, but the formed structure 10a is low in decorative effect. In the meantime, when the large-sized regions 11 are formed, the processing speed is low, but the formed structure 10a is high in decorative effect.

That is, in the structure 10a according to the first embodiment, the decorative effect is lower when the size of the region 11 is smaller so that the processing speed may be higher, whereas the processing speed is lower when the size of the region 11 is larger so that the decorative effect may be enhanced. When the laser oscillator 21 adjusted to one of the specifications is used, there is a problem of incompatibility between the processing speed and the decorative effect.

Accordingly, after dedication to researches, the inventor created a structure 10b in which each of regions 11 was small in size, the adjacent regions 11 constituted one region group 15, the arrangement directions of processed parts 14 was the same in the regions 11 constituting the one region group 15, and the processed parts 14 were formed so that the arrangement directions of processed parts 14 varied according to the region groups 15.

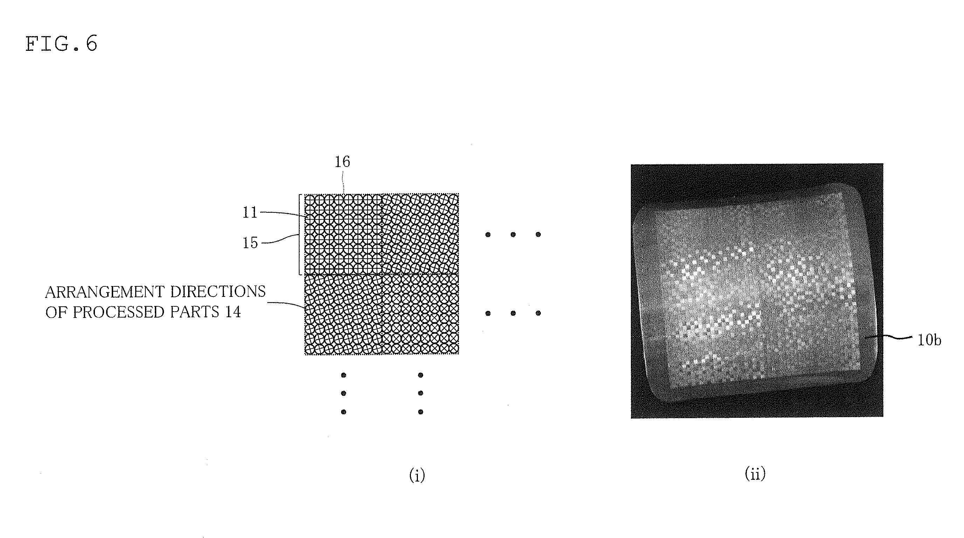

That is, in the structure 10b shown in FIG. 6 (i) and (ii), the arrangement directions of processed parts 14 vary according to the region groups 15. In this structure 10b, each of a plurality of ranges obtained by the division of a surface in which the regions 11 are arranged is a region-forming range 16, and a plurality of regions 11 are disposed in each region-forming range 16. Then the arrangement directions of the processed parts 14 formed in each of a large number of regions 11 in the structure 10b vary according to the region-forming ranges 16.

According to this structure 10b, each of the regions 11 is small in size, so that the processing speed of fine periodic compositions can be higher. Since the arrangement direction of processed parts 14 is the same in a plurality of regions 11 constituting one region group 15, all structural color generation in these regions 11 can be visually recognized from one direction at a time. Thus, it is possible to obtain a decorative effect similar to (or equal to or more than) that of structural color generation in the fine periodic composition formed in one of the large-sized regions 11. Moreover, since the arrangement directions of the processed parts 14 vary according to the region groups 15, structural color generation in any of the region groups 15 can be visually recognized when the structure 10b is seen from any direction. Thus, if the direction to see the structure is changed, brilliant structural color generation can be visually recognized, and a high decorative effect can be obtained. If one laser oscillator 21 having such specifications that the regions 11 are smaller in size is prepared to form the structure 10b shown in FIG. 6 (i) and (ii), the increase of the processing speed can be compatible with the enhancement of the decorative effect.

The structure 10b shown in FIG. 6 (i) and (ii) has such a restrictive matter that the region 11 is small in size, whereas the structure 10b according to the second embodiment shown in FIG. 3 is different from the former structure in that it has no such restrictive matter (in that the region 11 has any size). However, the configuration is similar in other respects, so that the same reference numbers are provided for explanation in the present embodiment. [0043]

Although a plurality of regions 11 constituting one region group 15 are formed within a foursquare range in the structure 10b shown in FIG. 6 (i) and (ii), the shape of the range (region-forming range 16) is not exclusively foursquare and can be any shape.

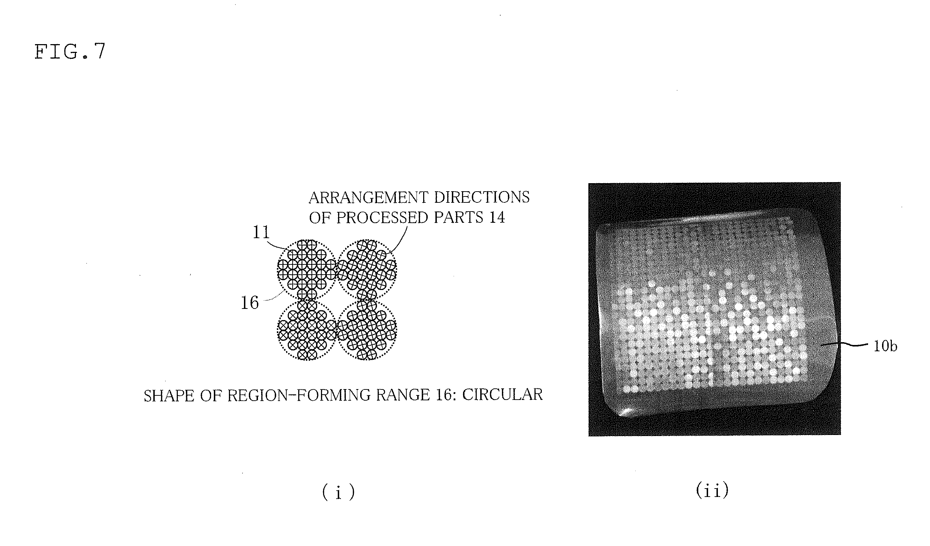

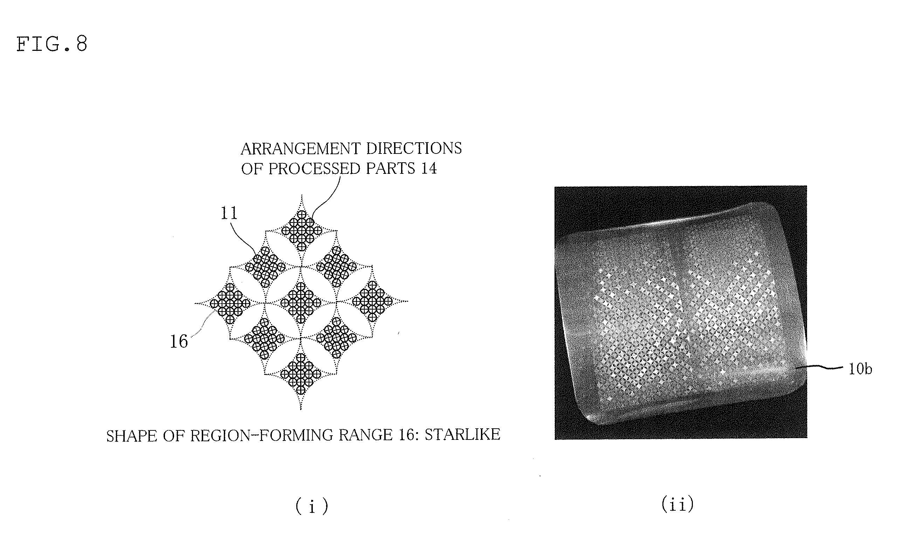

For example, the shape of the region-forming range 16 can be circular, as shown in FIG. 7 (i) and (ii). The shape of the region-forming range 16 can be starlike (a shape in which each side of a square is a curve), as shown in FIG. 8 (i) and (ii). Otherwise, the shape of the region-forming range 16 can be varied, for example, quadrate, elliptic, triangular, and polygonal. Even when the region-forming range 16 has any shape in this way, a high decorative effect can be obtained, and fine periodic compositions can be rapidly formed in the structure 10 as shown in FIG. 7 (i) and (ii) and FIG. 8 (i) and (ii).

(1-4) Processed Part, Coating, and Base Material

Now, the processed part 14 is described.

As described above, the processed part 14 is a fine composition formed by the occurrence of photodisintegration attributed to the application of pulsed laser light. The processed parts 14 include the depression 14-1 and the cavity 14-2.

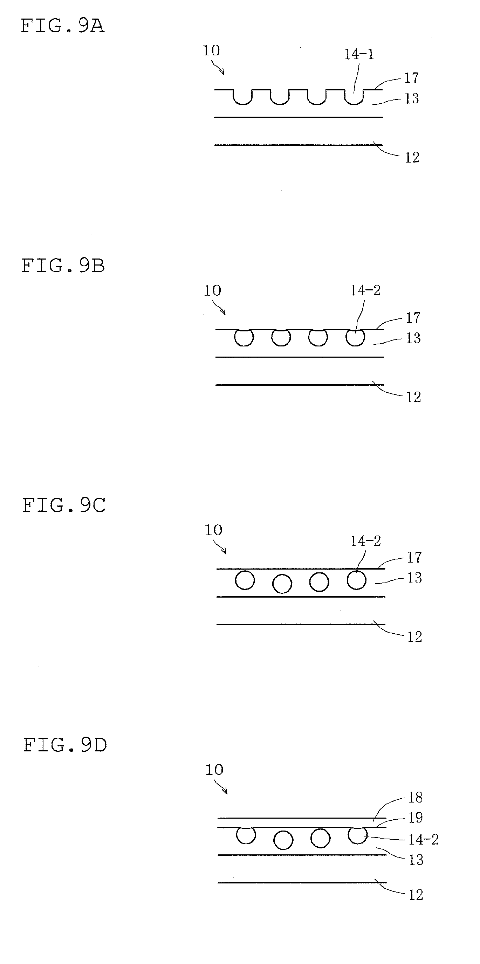

As shown in FIG. 9A, the depression 14-1 is a part depressed from the surface 17 of the coating 13. This depression 14-1 has a bottomed cylindrical shape in which an opening is formed in the surface 17 of the coating 13.

As shown in FIG. 9B and FIG. 9C, the cavity 14-2 is a substantially spherical hollow part formed inside the coating 13. Some of the cavities 14-2 are in contact with the surface 17 of the coating 13 (FIG. 9B), and some are not in contact (FIG. 9C). The former cavities 14-2 have film portions formed along the surface 17 of the coating 13, and the cavities 14-2 are closed (have no openings). The latter cavities 14-2 are formed inside the coating 13 apart from the surface 17 of the coating 13, and are closed in the same manner as the cavities 14-2 shown in FIG. 9B.

The depression 14-1 and the cavity 14-2 are formed by the occurrence of photodisintegration attributed to the application of pulsed laser light. That is, these processed parts 14 are formed when parts of the coating 13 to which the pulsed laser light has been applied absorb the laser light and generate heat and are then thermally decomposed and sublimated.

Here, whether the depression 14-1 or the cavity 14-2 is formed by the application of pulsed laser light depends on the physical properties of the coating 13 or an added substance.

For example, when a material absorbent of laser light is used for the coating 13, laser ablation progresses inward from the surface 17 of the coating 13. As a result, a large number of depressions 14-1 having openings are formed in the surface 17 of the coating 13.

If organic or inorganic ultraviolet absorber particles are added to the coating 13, laser ablation progresses inside the coating 13 from the organic or inorganic ultraviolet absorber particles. When the laser ablation excessively progresses, the progress reaches the surface 17 of the coating 13, and depressions 14-1 having openings are formed. On the other hand, when the progress has not reached the surface 17 of the coating 13, closed cavities 14-2 are formed inside the coating 13.

The coating 13 can be formed by any preferred existing known material. However, it is required that fine periodic compositions be formed by the application of light.

Preferred materials to form the coating 13 include polymer compounds such as polystyrene, polyethylene, polypropylene, polycarbonate, a nylon resin ("nylon" is a registered trademark), an acrylic resin, a vinyl chloride resin, and a phenol resin. It is also possible to use, as the material of the coating 13, a polyester compound such as polyethylene terephthalate (PET), polyethylene naphthalate (PEN), polybutylene terephthalate (PBT), or polytrimethylene terephthalate (PTT). It is also possible to use, as the material of the coating 13, a plurality of kinds of kneaded polymer compounds, copolymerized polymer compounds, or a polymer compound with a proper additive.

For the coating 13 to which the organic or inorganic ultraviolet absorber particles are added, it is possible to use a material that permits coating, for example, a thermoplastic resin and a thermosetting resin that are used as paint resin components (a film formation material of the coating 13 (matrix)).

More specifically, the thermoplastic resin includes, for example, olefin resins which include a random or block copolymer of alpha olefins and a cyclic olefin copolymer such as low-density polyethylene, high-density polyethylene, polypropylene, poly-1-butene, poly-4-methyl-1-pentene or ethylene, propylene, 1-butene, and 4-methyl-1-pentene; ethylene-vinyl copolymers such as an ethylene-vinyl acetate copolymer, an ethylene-vinylalcohol copolymer, and an ethylene-vinyl chloride copolymer; styrene resins such as polystyrene, an acrylonitrile-styrene copolymer, ABS, and an alpha-methylstyrene-styrene copolymer; vinyl resins such as polyvinyl chloride, polyvinylidene chloride, a vinyl chloride-polyvinylidene chloride copolymer, polyacrylic methyl, and polymethyl methacrylate; polyamide resins such as nylon 6 ("Nylon" is a registered trademark. The same applies to the following), nylon 6-6, nylon 6-10, nylon 11, and nylon 12; polyester resins such as polyethylen terephthalate, polybutylene terephthalate, polyethylene naphthalate, and copolymerization polyester of the above substances; polycarbonate resins, polyphenylene oxide resins; and biodegradable resins such as a polylactic acid.

The thermosetting resin includes, for example, a phenol resin, a ketone formaldehyde resin, a novolac resin, a xylene resin, an aromatic acrylic resin, a bisphenol epoxy resin, a benzoguanamine resin, a phenoxy resin, a phenol-modified alkyd resin, an unsaturated polyester resin, and an amino resin. It is possible to use a resin compound including the above thermosetting resin and the above thermoplastic resin, for example, a resin compound of a vinyl chloride-vinyl acetate copolymer, a vinyl chloride-maleic acid copolymer, a vinyl chloride-maleic acid-vinyl acetate copolymer, an acrylic copolymer, and a saturated polyester resin and the above-mentioned thermosetting resin.

The following materials are known as the ultraviolet absorber to be added. For example, the organic ultraviolet absorbers include benzophenone compounds, benzotriazole compounds, salicylic ester compounds, cyanoacrylate compounds, hydroxy benzoate compounds, benzoxazinone compounds, and triazine compounds, azo dyes, anthraquinone dyes, indigo dyes, phthalocyanine dyes, pyrazolone dyes, stilbene dyes, thiazole dyes, quinoline dyes, diphenylmethane dyes, triphenylmethane dyes, acridine dyes, azine dyes, thiazine dyes, oxazine dyes, polymethine dyes, indophenol dyes, naphthalimide dyes, and perylene dyes. One of these materials that has the maximum absorption in the wavelength region of desired laser light is used.

The inorganic ultraviolet absorbers include, for example, metal oxides such as zinc oxide, cerium oxide, zirconium oxide, iron oxide, and titanium oxide, and colloidal particles of composite metal oxide that includes the above metal oxides. One of these materials that has the maximum absorption in the wavelength region of desired laser light is used.

The depression 14-1 or the cavity 14-2 is formed in or in the vicinity of the surface 17 of the coating 13 in FIG. 9A to FIG. 9C, but is not exclusively formed in or in the vicinity of the surface 17 of the coating 13. As shown in FIG. 9D, it is also possible to form a structure in which a protective layer 18 is provided on the surface 17 of the coating 13 and in which the depression 14-1 or the cavity 14-2 is formed in or in the vicinity of an interface 19 between the coating 13 and the protective layer 18. For example, the protective layer 18 made of a laser-light-transmitting material is applied to or laid on the surface 17 of the coating 13, and laser light is applied from above the protective layer 18. As a result, the depression 14-1 or the cavity 14-2 is formed in the interface 19 between the coating 13 and the protective layer 18 on the side of the coating 13 or formed inside the coating 13, and the structure 10 shown in FIG. 9D can be obtained. Alternatively, the depression 14-1 or the cavity 14-2 is formed in the coating 13, and its upper surface is coated with a paint (or a transparent layer is laid on its upper surface), whereby the structure 10 shown in FIG. 9D can also be obtained.

Any material, for example, a metal, plastic, paper, or glass can be used to form the base material 12. In particular, the base material 12 is preferably a packing container base material such as a metal cap, a metal can, a plastic cap, or a plastic bottle. The metal base material may include various surface-treated steel plates such as tin-free steel, a tin-plated steel plate, and a tin plate, a light metallic plate such as an aluminum plate, and metallic plates or metallic foils used in conventional metal cans and metal caps. It is also possible to use a resin coating metal plate having its surface coated with a resin such as polyester. The plastic base material may be the previously-mentioned thermoplastic resin or thermosetting resin, or a polymeric resin used in conventional plastic caps and plastic bottles. When the metallic or plastic base material is in the form of a cap, a can, or a bottle, the coating 13 is formed on the outer side of its top plate or on the outer side of its barrel so that the structure 10 can be obtained.

The structure 10 shown in FIG. 1 has a configuration in which the region 11 is only formed in the coating 13, but is not limited to this configuration. For example, the structure 10 shown in FIG. 1 may have a configuration in which the region 11 is formed in the coating 13 and in which the surface of the coating 13 except for the region 11 or the interface or surface of the structure 10 having a laminated construction is partly or totally covered with, for example, an ink.

More specifically, for example, the structure 10 is formed on the side surface of a metal can. A design such as a brand name is drawn by the structure 10. Parts other than the design drawn by the structure 10 have printing thereon so that the metal surface is covered. [0054]

(2) Structure-forming Device

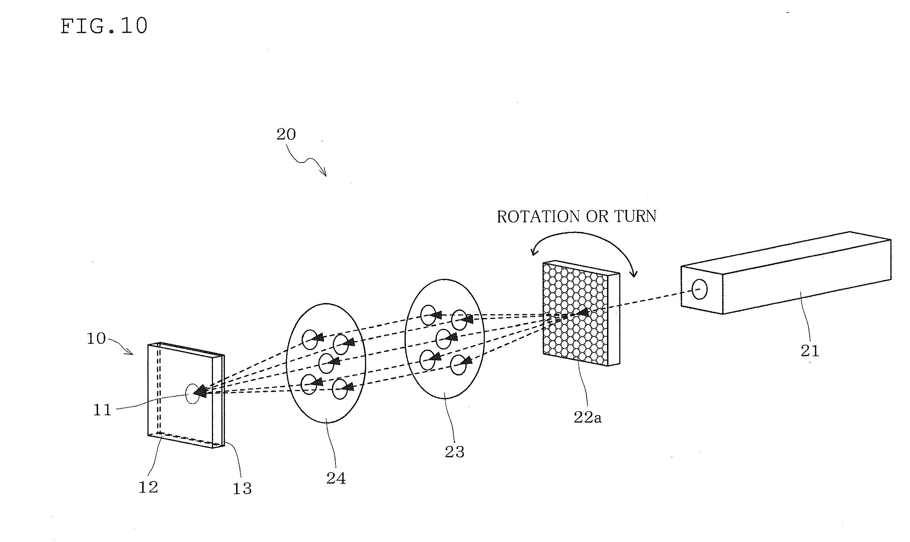

Now, the configuration of the structure-forming device is described with reference to FIG. 10.

FIG. 10 is a schematic perspective view showing the configuration of the structure-forming device.

The structure-forming device is a laser light irradiation device to generate laser light having a periodic intensity distribution.

As shown in FIG. 10, the structure-forming device 20 comprises the laser oscillator 21, a beam splitter (transmission diffraction optical element) 22a, a first lens 23, and a second lens 24.

The laser oscillator (laser light source) 21 is a device for outputting pulsed laser light. For example, a nanosecond laser such as a YAG laser, a $YVO_4$ laser, or a YLF laser, or a picosecond laser can be used. These pulsed lasers have a repetition frequency of several Hz to several ten MHz, and emit, with an extremely small time width of several ps to several ten ns, energy which has been stored during the repetition frequency. Therefore, high peak power can be efficiently obtained from a small amount of input energy.

This laser oscillator 21 has a function of adjusting the number of irradiation pulses. The laser oscillator 21 can also control energy density (fluence: energy of one pulse per irradiation area) by the adjustment of laser output.

The energy density is controllable by the adjustment of the laser output in a laser oscillator 21. For example, the energy density is controllable by change of the irradiation beam diameter with the same laser output in a laser oscillator 21.

The beam splitter 22a is a transmission optical element which causes diffraction by minute depressions or projections that are periodically carved in its surface. The beam splitter 22a splits laser light into a plurality of light fluxes. The number of light fluxes after splitting and the traveling direction of the light fluxes after splitting are determined, for example, by the shape and period of the minute depressions or projections. However, the beam splitter 22a can split laser light into three or more directions.

This beam splitter 22a can rotate or turn around the traveling direction of incident laser light. The beam splitter 22a can be rotated or turned either manually or automatically. A motor 31 (described later) is attached to the beam splitter 22a when the beam splitter 22a is automatically rotated or turned. While the beam splitter 22a is being rotated or turned or when the beam splitter 22a has reached a predetermined angle and stopped rotating or turning, a pulse of laser light is output from the laser oscillator 21 to form a fine periodic composition in the structure 10 (10a, 10b).

A mechanism to automatically rotate or turn the beam splitter 22a will be described later.

There is a certain relation between the grid pattern of the depressions or projections in the beam splitter 22a and the grid pattern of the processed parts 14 formed in the coating 13. This relation will be described later.

The first lens 23 is a collimator element which collimates a plurality of light fluxes split by the beam splitter 22a. For example, a quartz plano-convex lens having a focal distance of 200 mm can be used as the first lens 23. The first lens 23 can be located, for example, 200 mm from the beam splitter 22a.

The second lens 24 is a collection element which collects a plurality of light fluxes collimated by the first lens 23 and causes the light fluxes to cross and interfere. This interference region has a distribution of high-density ranges, and the structure 10 is irradiated in this region. In this case, the distance (period) d between the high-density ranges in the high-density ranges varies according to a crossing angle $\theta$ of the light fluxes. The period d of the high-density ranges can be found by the use of a laser wavelength $\lambda$ and the crossing angle $\theta$ of the light fluxes from the following equation.

$$d=\lambda/\{2\sin(\theta/2)\}$$

For example, a quartz plano-convex lens having a focal distance of 100 mm can be used as the second lens 24.

Instead of the convex lenses, optical elements such as Fresnel lenses or graded-index (GRIN) lenses can be used as the first lens 23 and the second lens 24.

A light flux selecting element (not shown) can be provided between the first lens 23 and the second lens 24. The light flux selecting element is disposed at the position where the light fluxes which have passed through the first lens 23 are focused. The light flux selecting element is used as a mask to block some of the light fluxes that are not necessary for interference and only pass necessary light fluxes.

Furthermore, one or more lenses (not shown) can be provided between the first lens 23 and the second lens 24. A spatial region where a plurality of light fluxes cross and interfere can be adjusted to a desired place by the adjustment of the shape and position of the lenses.

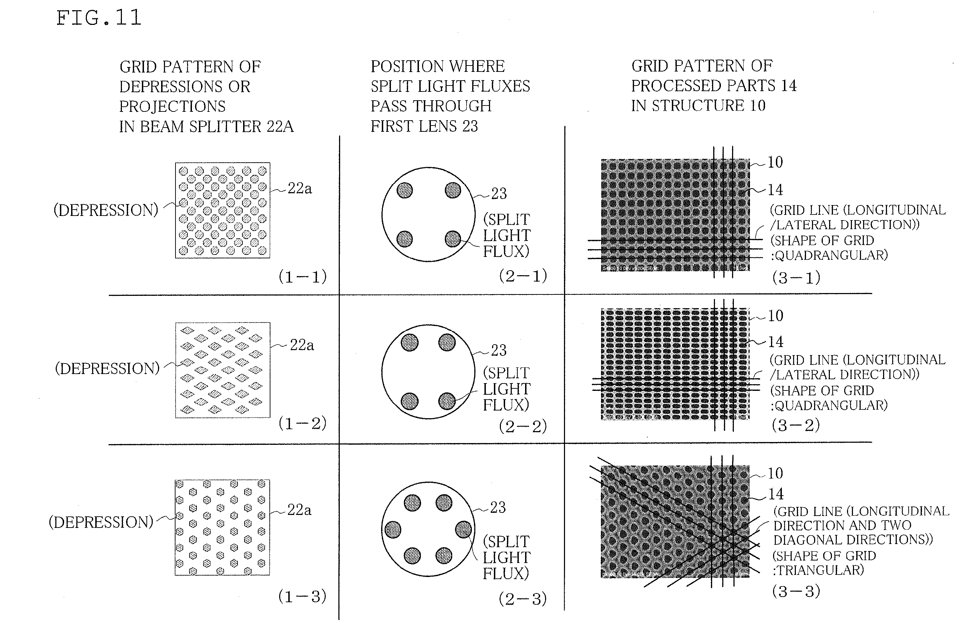

There is a certain relation between the grid pattern of the depressions or projections in the beam splitter 22a and the grid pattern of the processed parts 14 formed in the coating 13 of the structure 10. This relation is described with reference to FIG. 11.

There are various grid patterns of the minute depressions or projections carved in the surface of the beam splitter 22a. For example, in a grid pattern shown in (1-1) of FIG. 11, each of the depressions (or projections) in the beam splitter 22a is circular, and the arrangement direction of these depressions (or projections) is a diagonal direction. In a grid pattern shown in (1-2) of FIG. 11, each of the depressions (or projections) in the beam splitter 22a is diamond-shaped, and the arrangement direction of these depressions (or projections) is a diagonal direction. Moreover, in a grid pattern shown in (1-3) of FIG. 11, each of the depressions (or projections) in the beam splitter 22a is hexagonal, and the arrangement directions of these depressions (or projections) are a longitudinal direction and a diagonal direction.

The grid pattern of the processed parts 14 formed in the coating 13 is determined by the grid pattern of the depressions or projections in the beam splitter 22a. That is, the shape of the grid in the grid pattern of the processed parts 14 is determined by the number into which the beam splitter 22a splits the pulsed laser light. For example, when the grid pattern of the depressions or projections in the beam splitter 22a is the grid pattern shown in (1-1) of FIG. 11, the laser light entering the beam splitter 22a is split into four directions. When passing through the first lens 23, the split light fluxes pass at positions corresponding to the corners of a foursquare contained in the first lens 23 ((2-1) of FIG. 11). In the pattern formed in the coating 13, a plurality of rounded-corner quadrate processed parts 14 are regularly arranged in a longitudinal/lateral direction ((3-1) of FIG. 11). That is, the processed parts 14 are formed to be arranged in the form of the cross points of the grid composed of longitudinal grid lines and lateral grid lines. The shape of the grid in this case is quadrangular.

When the grid pattern of the depressions or projections in the beam splitter 22a is the grid pattern shown in (1-2) of FIG. 11, the laser light entering the beam splitter 22a is split into four directions. When passing through the first lens 23, the split light fluxes pass at positions corresponding to the corners of a longitudinally larger rectangle contained in the first lens 23 ((2-2) of FIG. 11). In the pattern formed in the coating 13, a plurality of laterally larger rectangular processed parts 14 are regularly arranged in a longitudinal/lateral direction ((3-2) of FIG. 11). That is, the processed parts 14 are formed to be arranged in the form of the cross points of the grid composed of longitudinal grid lines and lateral grid lines. The shape of the grid in this case is quadrangular.

Furthermore, when the grid pattern of the depressions or projections in the beam splitter 22a is the grid pattern shown in (1-3) of FIG. 11, the laser light entering the beam splitter 22a is split into six directions. When passing through the first lens 23, the split light fluxes pass at positions corresponding to the corners of a hexagon contained in the first lens 23 ((2-3) of FIG. 11). In the pattern formed in the coating 13, a plurality of nearly circular processed parts 14 are regularly arranged in two directions: a longitudinal direction and a diagonal direction ((3-3) of FIG. 11). That is, the processed parts 14 are formed to be arranged in the form of the cross points of the grid composed of longitudinal grid lines, right-sloped grid lines, and left-sloped grid lines. The shape of the grid in this case is triangular. [0066]

Thus, the grid pattern of the processed parts 14 formed in the coating 13 is determined by the grid pattern of the depressions or projections in the beam splitter 22a. That is, the shape of the grid in the grid pattern of the processed parts 14 is determined by the number into which the beam splitter 22a splits the pulsed laser light. Consequently, the beam splitter 22a splits the pulsed laser light into three or more directions, and the processed parts 14 are formed to be arranged in the form of grid cross points of a polygon (e.g. a triangle or quadrangle) which varies in shape depending on the number of splits.

When the grid patterns of the processed parts 14 vary as shown in (3-1) to (3-3) of FIG. 11, a structural color is developed as in the structure 10 shown in FIG. 1 because the distance between the processed parts 14 is close to the visible light wavelength.

The arrangement directions of the processed parts 14 shown in (3-1) to (3-3) of FIG. 11 can be varied according to the regions 11 by the structure-forming method described later. Thus, even if the direction to see the structure 10 is changed, structural color generation in any of the regions 11 can be visually recognized.

The term "grid" may be interpreted as a plurality of longitudinal lines and a plurality of lateral lines that interest at right angles as in, for example, a gridiron. However, in the present embodiment, the "grid" is not limited to the longitudinal and lateral lines that interest "at right angles". For example, the "grid" also includes a plurality of parallel lines and a plurality of other parallel lines that interest at any angle. The "grid" also includes a plurality of parallel lines, a plurality of other parallel lines, and a plurality of yet other parallel lines that interest at any angle, as in the grid pattern of the processed parts 14 shown in (3-3) of FIG. 11.

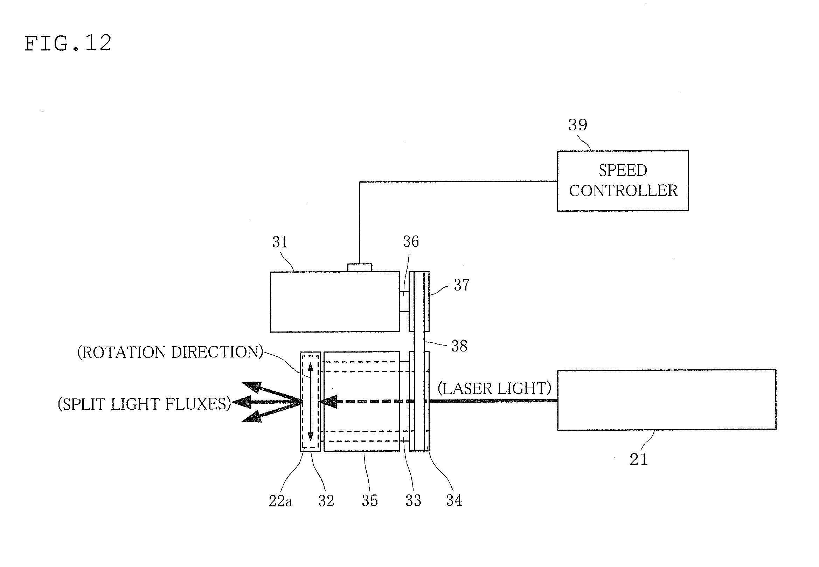

Now, the mechanism (angle adjusting means) to rotate or turn the beam splitter 22a is described with reference to FIG. 12.

As shown in FIG. 12, the beam splitter 22a can be rotated or turned by the use of the motor 31. More specifically, the beam splitter 22a is housed in a holder 32, and a first pulley 34 is coupled to the holder 32 via a coupler 33. The coupler 33 is pivotally supported rotatably by a support portion 35. On the other hand, a second pulley 37 is attached to a rotation shaft 36 of the motor 31. The first pulley 34 and the second pulley 37 are linked by a belt 38. In such a configuration, if the rotation shaft 36 of the motor 31 is rotated, the rotation force is transmitted to the first pulley 34 via the second pulley 37 and the belt 38, and the holder 32 coupled to the first pulley 34 and the beam splitter 22a are rotated.

The coupler 33 is cylindrically shaped, and the first pulley 34 is annularly shaped (doughnut-shaped). Thus, the laser light output from the laser oscillator 21 can reach the beam splitter 22a through an annular central opening in the first pulley 34 and through a cylindrical hollow portion in the coupler 33.

A timing belt is preferably used as the belt 38 to prevent slippage between the belt 38 and the first pulley 34 or the second pulley 37. In this case, the first pulley 34 and the second pulley 37 used preferably have grooves formed in their circumferential surfaces so that a projection in the timing belt fits in the grooves.

Furthermore, the rotation speed of the beam splitter 22a can be adjusted by a speed controller 39 connected to the motor 31. The speed controller 39 has a setting section (not shown) for setting the rotation speed, and a current control section (not shown) for passing a current corresponding to the set rotation speed through the motor 31. Thus, the speed controller 39 can rotationally drive the motor 31 at the set rotation speed.

The inclination of the arrangement direction of the processed parts 14 in the region 11 of the structure 10 can be calculated by the use of the rotation speed of the beam splitter 22a and the pulse repetition frequency of the laser light.

Here, when the beam splitter 22a is used in a rotated state, an inclination angle D[°] of the arrangement direction of the processed parts 14 can be calculated by the following equation:

$$D = (V/60) \times (1/f) \times 360 \quad \text{...(Equation 1)}$$

wherein the rotation speed of the beam.splitter 22a is V [rpm], and the pulse repetition frequency of the laser light output from the laser oscillator 21 is f [Hz].

Equation 1 is used to make a trial calculation of a specific numerical value.

For example, an inclination angle D1 of the arrangement direction of the processed parts 14 is calculated by the following equation:

$$D1=(15/60)\times(1/10)\times360=9 \quad ...(\text{Equation 2})$$

wherein the rotation speed of the beam splitter 22a is 15 [rpm] (15 revolutions per minute), and the pulse repetition frequency of the laser light output from the laser oscillator 21 is 10 [Hz] (=10 shot/sec).

In this case, ten pulsed laser lights are emitted per second, so that the emission interval is 0.1 seconds. The revolution number of the beam splitter 22a is 0.025 revolutions within 0.1 seconds. That is, the beam splitter 22a makes 9° (=360°×0.025) revolutions within 0.1 seconds. Therefore, the inclination angle D1 of the arrangement direction of the processed parts 14 is 9°.

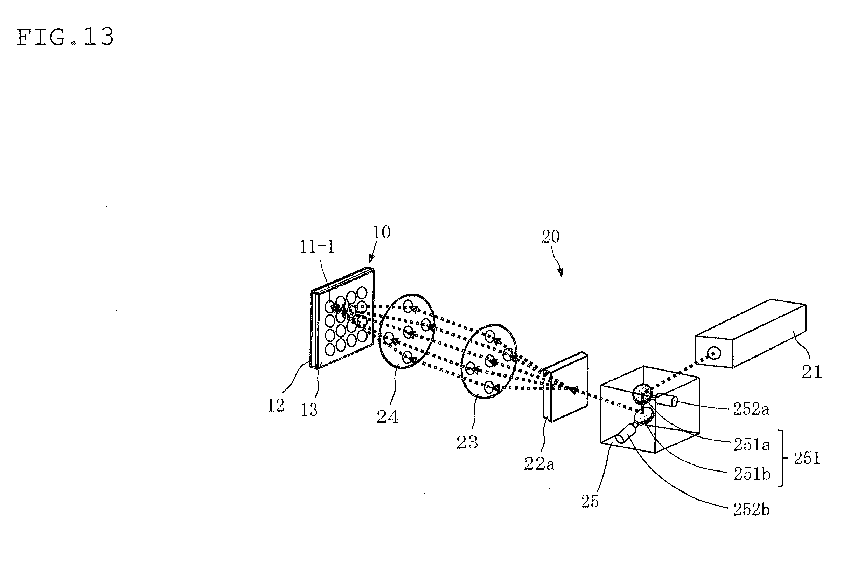

As shown in FIG. 13, the structure-forming device 20 can comprise a laser scanner 25 between the laser oscillator 21 and the beam splitter 22a.

The laser scanner 25 is an optical device to reflect the laser light output from the laser oscillator 21 by an internally provided mirror 251 and propagate the laser light toward the beam splitter 22a.

One mirror 251 or two or more mirrors 251 can be provided in one laser scanner 25. When two mirrors 251 are provided in one laser scanner 25, the first mirror 251 (first mirror 251a) reflects the laser light output from the laser oscillator 21, and the second mirror 251 (second mirror 251 b) reflects the laser light which has been reflected by the first mirror 251 a and then propagates the laser light to the beam splitter 22a.

Furthermore, the laser scanner 25 is provided with a mirror angle controller to automatically (or manually) rotate or turn the laser light reflection surface in the first mirror 251a or the second mirror 251 b at a predetermined speed.

For example, a device called a galvano-scanner or a galvanometer scanner can be used as the mirror angle controller.

The galvano-scanner comprises a galvano-motor 252 and a driver (not shown). In FIG. 13, the galvano-motor 252 (described later) to which the mirror 251 is attached is only shown among the components of the mirror angle controller.

The mirror 251 is attached to the end of the rotation shaft (motor shaft) of the galvano-motor 252. The driver is an electronic circuit to drive and control the galvano-motor 252. The driver can rotate or turn the mirror 251 in one direction or two directions (directions in which two axes in an X-axis direction and a Y-axis direction are combined in the case of the two directions) by applying a voltage within a given range to the galvano-motor 252 or by passing a current within a given range.

The galvano-scanner includes an analog type and a digital type.

In the analog type, the driver applies an analog voltage having a predetermined value to the galvano-motor 252 and thereby turns the mirror 251 attached to the galvano-motor 252. For example, when a control range of the analog voltage is ±10 V, the rotation shaft of the galvano-motor 252 is turned +10° by the application of a voltage of +5 V, and the reflection surface in the mirror 251 is also turned +10° accordingly. The rotation shaft of the galvano-motor 252 is turned-6° by the application of a voltage of -3 V, and the reflection surface in the mirror 251 is also turned -6° accordingly.

In the digital type, a controller for controlling its driver is connected to this driver, and a predetermined control software or an application program interface (API) is used to transmit an instruction to the controller from a personal computer to control the driver. The controller outputs a control pulse in accordance with the instruction from the personal computer, and controls the galvano-motor 252 via the driver.

In this digital type, an encoder (not shown) is additionally provided in the galvano-motor 252, and the angle of the mirror 251 is constantly monitored by a closed loop between the controller and the galvano-motor 252. This enables highly accurate turning control.

Moreover, since the controller and its control software are systematized in a set, the angle control of the galvano-motor 252 can be easily synchronized with the repetition frequency of the laser output.

When the laser scanner 25 is provided in the structure-forming device 20, it is possible to freely choose whether to use the analog type or digital type galvano-scanner. [0078]

If the galvano-motor 252 is driven and controlled in this mirror angle controller to vary the angle of the reflection surface in the mirror 251, the propagation direction of the laser light to be propagated to the beam splitter 22a from the laser scanner 25 can be adjusted. For example, if the angle of the reflection surface in the first mirror 251 a is changed, the propagation direction of the laser light horizontally moves. If the angle of the reflection surface in the second mirror 251 b is changed, the propagation direction of the laser light vertically moves. Thus, if the angles of the reflection surfaces in the first mirror 251 a and the second mirror 251 b are changed at a constant speed (or periodically), the laser light irradiation positions in the beam splitter 22a can be horizontally or vertically scanned, and the region where a plurality of light fluxes interfere in the vicinity of the structure 10 can be moved accordingly. Then fine periodic compositions can be sequentially formed in a large number of regions 11 in the coating 12 of the structure 10 in accordance with the repetition frequency of the laser light output from the laser oscillator 21.

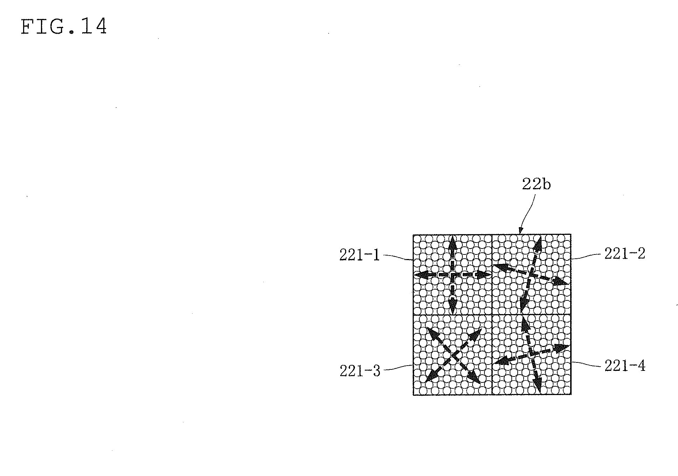

In the structure-forming device 20, for example, a beam splitter 22b having a configuration shown in FIG. 14 can be provided instead of the beam splitter 22a shown in FIG. 10.

The beam splitter 22b is structured to comprise a plurality of diffraction optical elements 221 different in the traveling direction of light fluxes after splitting. For example, in FIG. 14, four diffraction optical elements 221-1 to 221-4 are disposed on the same surface. When the traveling direction of the light fluxes split by the optical element 221-1 disposed in the upper left part is at 0° (reference angle), the traveling directions of the light fluxes in the other diffraction optical elements 221-2 to 221-4 are at different angles (e.g. 18°, 45°, and 75°).

A method of forming the structure 10 by using the structure-forming device 20 provided with the beam splitter 22b is described in detail in the following "(3-2) Second Embodiment of Structure-forming Method".

The traveling directions of the light fluxes split in the four diffraction optical elements 221-1 to 221-4 are not limited to 0°, 18°, 45°, and 75°, and can be at any preferable angles.

Whether to use the beam splitter 22a shown in FIG. 10 or the beam splitter 22b shown in FIG. 14 as the beam splitter to be provided in the structure-forming device 20 can be determined by the presence of the laser scanner 25 and by the kind of structure 10 to be formed. When either the beam splitter 22a or the beam splitter 22b may be used, these beam splitters are collectively referred to as a "beam splitter 22" in the following explanation. [0081]

(3) Structure-forming Method

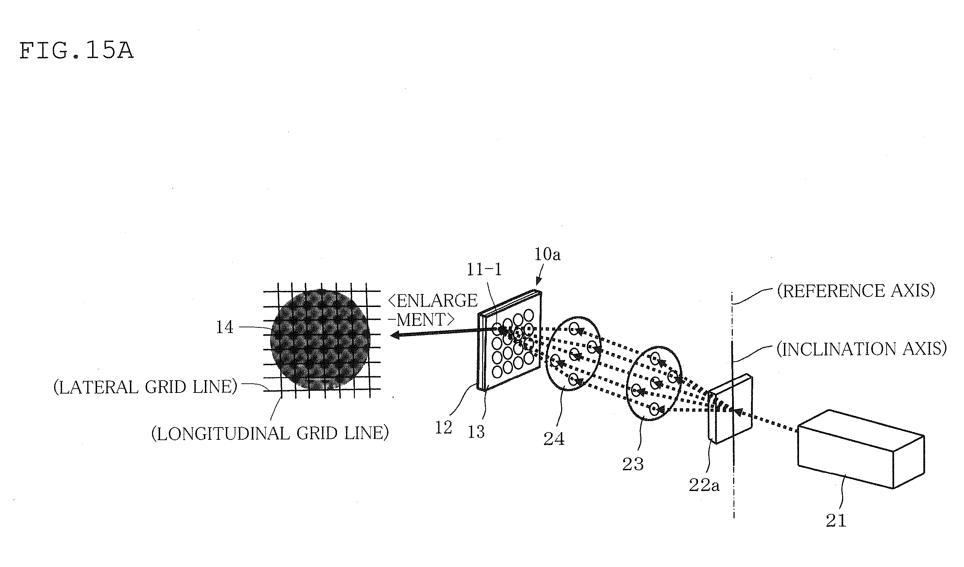

Now, the method of forming the structure according to the present embodiment is described with reference to FIG. 15A to FIG. 15C, FIG. 16, and FIG. 17A to FIG. 17D.

Here, the method of forming the structure 10a according to the first embodiment by using the structure-forming device 20 shown in FIG. 10 is described as "(3-1) First Embodiment of Structure-forming Method", and the method of forming the structure 10b according to the second embodiment by using the structure-forming device 20 shown in FIG. 13 and the beam splitter 22b shown in FIG. 14 is described as "(3-2) Second Embodiment of Structure-forming Method".

(3-1) First Embodiment of Structure-forming Method

In the present embodiment, the method of forming the structure 10a shown in FIG. 1 by using the structure-forming device 20 shown in FIG. 10 is described.

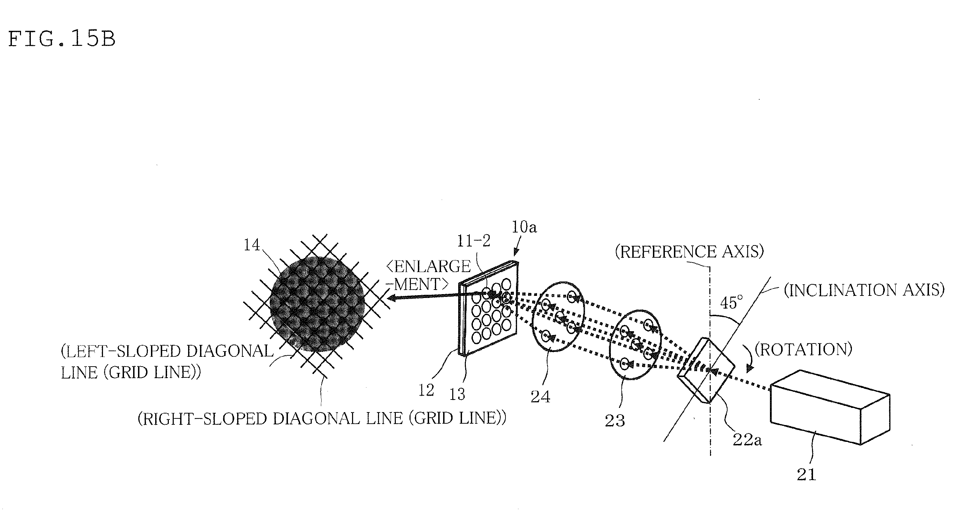

The beam splitter 22a of the structure-forming device 20 has the mechanism (mechanism shown in FIG. 12) which automatically rotates in a direction shown in FIG. 15B at a predetermined speed.

First, the structure 10a is located at a predetermined distance from the second lens 24 of the structure-forming device 20. This location includes the interference region where a plurality of light fluxes are crossed by the second lens 24 (see FIG. 16).

When the beam splitter 22a reaches a predetermined inclination angle (in FIG. 15A, an angle (0°) at which an inclination axis indicating the inclination angle of the beam splitter 22a corresponds to a reference axis indicating a vertical direction), the laser oscillator 21 outputs a pulse of laser light. The beam splitter 22a splits the laser light to form a plurality of (five in FIG. 15A) split light fluxes. The first lens 23 collimates the split light fluxes. The second lens 24 crosses the split light fluxes to form the interference region, and applies the light fluxes to the coating 13 of the structure 10a.

As a result, in the coating 13, a fine periodic composition is formed in the region 11-1 by the distribution of a high-intensity region in the interference region. This fine periodic composition has a structure in which the processed parts 14 are arranged in the form of the cross points of a grid composed of longitudinal grid lines and lateral grid lines (see FIG. 15A). [0084]

As shown in FIG. 15B, the structure 10a is then slightly displaced along the surface direction of the surface 17 of the structure 10a. However, this position is also located at a predetermined distance from the second lens 24 of the structure-forming device 20, and includes the interference region where a plurality of light fluxes are crossed by the second lens 24.

When the beam splitter 22a reaches a predetermined inclination angle (in FIG. 15B, the inclination axis of the beam splitter 22a is 45° relative to the reference axis (vertical direction)), the laser oscillator 21 outputs a pulse of laser light. The beam splitter 22a splits the laser light to form a plurality of split light fluxes. The first lens 23 collimates the split light fluxes. The second lens 24 crosses the split light fluxes to form the interference region, and applies the light fluxes to the coating 13 of the structure 10a. In this case, since the inclination angle of the beam splitter 22a is 45°, the direction in which the beam splitter 22a splits the laser light is also inclined 45° as compared to that in FIG. 15A. In the interference region where the split light fluxes cross, the direction of the interference of a plurality of light fluxes is inclined 45° as compared to that in FIG. 15A.

As a result, a fine periodic composition is formed in the region 11-2 in the coating 13. This fine periodic composition has a structure in which the processed parts 14 are arranged in the form of the cross points of a grid composed of right-sloped diagonal grid lines and left-sloped diagonal grid lines (see FIG. 15B).

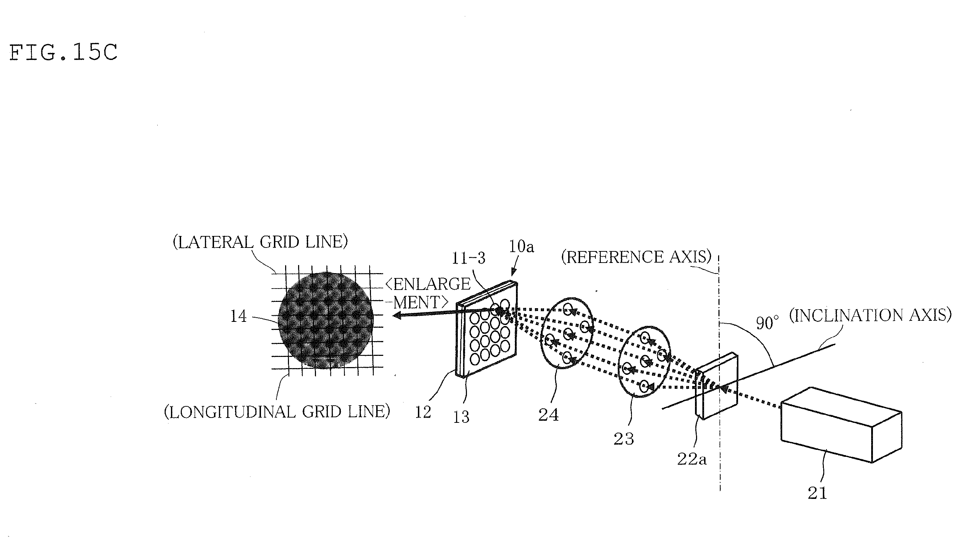

Furthermore, as shown in FIG. 15C, the structure 10a is further displaced along the surface direction of the surface 17 of the structure 10a. However, this position is also located at a predetermined distance from the second lens 24 of the structure-forming device 20, and includes the interference region where a plurality of light fluxes are crossed by the second lens 24.

When the beam splitter 22a reaches a predetermined inclination angle (in FIG. 15C, the inclination axis of the beam splitter 22a is 90° relative to the reference axis (vertical direction)), the laser oscillator 21 outputs a pulse of laser light. The beam splitter 22a splits the laser light to form a plurality of split light fluxes. The first lens 23 collimates the split light fluxes. The second lens 24 crosses the split light fluxes to form the interference region, and applies the light fluxes to the coating 13 of the structure 10a. In this case, since the inclination angle of the beam splitter 22a is 90°, the direction in which the beam splitter 22a splits the laser light is also inclined 90° as compared to that in FIG. 15A. In the interference region where the split light fluxes cross, the direction of the interference of a plurality of light fluxes is inclined 90° as compared to that in FIG. 15A.

As a result, a fine periodic composition is formed in the region 11-3 in the coating 13. This fine periodic composition has a structure in which the processed parts 14 are arranged in the form of the cross points of a grid (a grid which is inclined 90° as compared to the grid pattern of the processed parts 14 shown in FIG. 15A) composed of longitudinal lines and lateral lines (see FIG. 15C).

Thus, the laser oscillator 21 outputs a pulse of laser light whenever the rotating beam splitter 22a reaches the predetermined angles. Thereby, the direction in which the laser light is split by the beam splitter 22a is changed at each of the predetermined angles, and the direction in which a plurality of light fluxes interfere in the interference region is changed at the same time. The fine periodic composition can be then formed so that the arrangement directions of the processed parts 14 vary according to the regions 11.

In the structure-forming device 20, the lenses 23 and 24 are used as the optical elements to relay the laser light from the beam splitter 22a to the laser light irradiation part (the interference region shown in FIG. 16). Therefore, when the structure 10a shown in FIG. 1 is formed, the beam splitter 22a has only to be rotated or turned, and the optical elements other than the beam splitter 22a do not need to be operated, so that the process of forming the fine periodic composition can be simple.

Although the structure-forming method according to the present embodiment has been described as the method of forming the structure 10a shown in FIG. 1, the structure 10b shown in FIG. 3 can also be formed by a similar method.

For example, when a fine periodic composition is formed in each of the regions 11 included in one region group 15, the rotation of the beam splitter 22a is stopped, and the place where the light fluxes collected by the second lens 24 cross is moved on the coating 13 while the structure 10 is moved in the surface direction. Consequently, the fine periodic composition is formed in each of the regions 11.

When a fine periodic composition is formed in each of the regions 11 included in the next region group 15, the beam splitter 22a is then turned, and the turning of the beam splitter 22a is stopped when a predetermined angle has been reached. While the structure 10 is moved in this condition, the place where the light fluxes collected by the second lens 24 cross is moved on the coating 13. Consequently, the fine periodic composition is formed in each of the regions 11.

Thus, when a fine periodic composition is formed in each of the regions 11 included in one region group 15, the angle of the beam splitter 22a is fixed. When a fine periodic composition is formed in each of the regions 11 included in the next region group 15, the angle of the beam splitter 22a is changed. As a result, the fine periodic composition can be formed so that the arrangement directions of the processed parts 14 vary according to the region groups 15. Consequently, the structure 10b shown in FIG. 3 can be formed by the use of the structure-forming device 20 having the configuration shown in FIG. 10.

(3-2) Second Embodiment of Structure-forming Method

In the present embodiment, the method of forming the structure 10b shown in FIG. 3 by using the structure-forming device 20 shown in FIG. 13 and the beam splitter 22b shown in FIG. 14 is described.

The laser scanner 25 has the mechanism to automatically rotate or turn or stop the first mirror 251 a and the second mirror 251 b at a predetermined speed.

The traveling directions of the light fluxes split in the four diffraction optical elements 221-1 to 221-4 shown in FIG. 14 are 0°, 18°, 45°, and 75°, respectively.

First, the structure 10b is located at a predetermined distance from the second lens 24 of the structure-forming device 20. This location includes the interference region where a plurality of light fluxes are crossed by the second lens 24 (see FIG. 16).

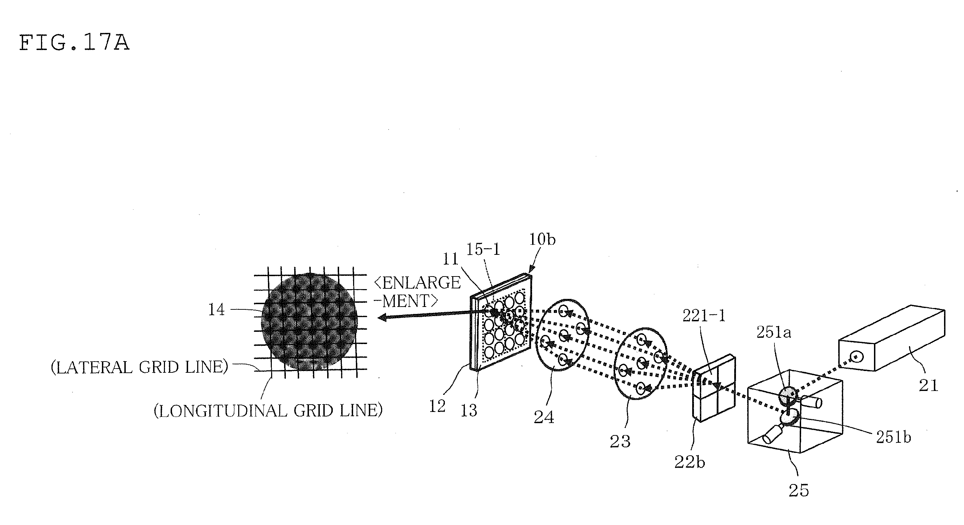

When the first mirror 251 a and the second mirror 251 b of the laser scanner 25 respectively reach predetermined angles (in FIG. 17A, an angle at which the propagation direction of the laser light from the laser scanner 25 to the beam splitter 22b is a direction to the first diffraction optical element 221-1 of the beam splitter 22b), the laser oscillator 21 outputs a pulse of laser light. The first diffraction optical element 221-1 of the beam splitter 22b splits the laser light to form a plurality of (five in FIG. 17A) split light fluxes. The first lens 23 collimates the split light fluxes. The second lens 24 crosses the split light fluxes to form the interference region, and applies the light fluxes to the coating 13 of the structure 10b.

As a result, in the coating 13, a fine periodic composition is formed in the region 11 in the region group 15-1 by the distribution of a high-intensity region in the interference region. This fine periodic composition has a structure in which the processed parts 14 are arranged in the form of the cross points of a grid composed of longitudinal grid lines and lateral grid lines (see FIG. 17A).

A fine periodic composition is formed in each of a plurality of the regions 11 constituting one region group 15-1 while the first mirror 251 a and the second mirror 251 b are respectively changed to predetermined angles in accordance with the repetition frequency of the laser light output from the laser oscillator 21. At the same time, the laser light from the laser scanner 25 always passes through the first diffraction optical element 221-1 of the beam splitter 22b. As a result, a fine periodic composition in which the arrangement direction of processed parts 14 is the same is formed in each of a plurality of regions 11 constituting one region group 15-1.

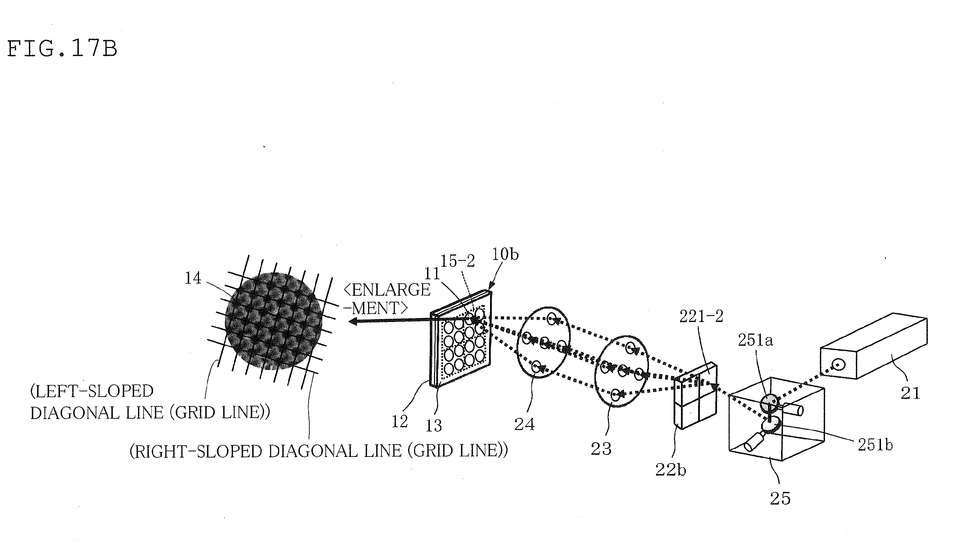

When the first mirror 251a and the second mirror 251b of the laser scanner 25 then respectively reach predetermined angles (in FIG. 17B, an angle at which the propagation direction of the laser light from the laser scanner 25 to the beam splitter 22b is a direction to the second diffraction optical element 221-2 of the beam splitter 22b), the laser oscillator 21 outputs a pulse of laser light. The second diffraction optical element 221-2 of the beam splitter 22b splits the laser light to form a plurality of split light fluxes. The first lens 23 collimates the split light fluxes. The second lens 24 crosses the split light fluxes to form the interference region, and applies the light fluxes to the coating 13 of the structure 10b. In this case, since the splitting angle of the second diffraction optical element 221-2 is 18°, the direction in which a plurality of light fluxes interfere in the interference region where the split light fluxes cross is inclined 18° as compared to that shown in FIG. 17A.

As a result, in the coating 13, a fine periodic composition is formed in the region 11 in the region group 15-2. This fine periodic composition has a structure in which the processed parts 14 are arranged in the form of the cross points of a grid composed of diagonal grid lines sloped to the right 18° from the reference angle and grid lines that cross at right angles with the right-sloped diagonal grid lines (see FIG. 17B).

When a fine periodic composition is formed in each of the regions 11 constituting one region group 15-2, the laser light from the laser scanner 25 always passes through the second diffraction optical element 221-2 of the beam splitter 22b. As a result, a fine periodic composition in which the arrangement direction of processed parts 14 is the same is formed in each of the regions 11 constituting one region group 15-2.

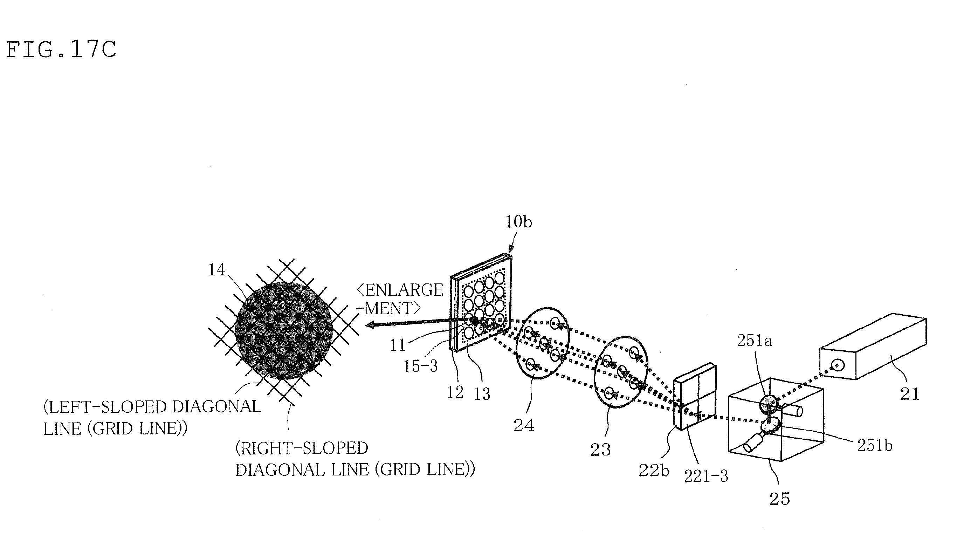

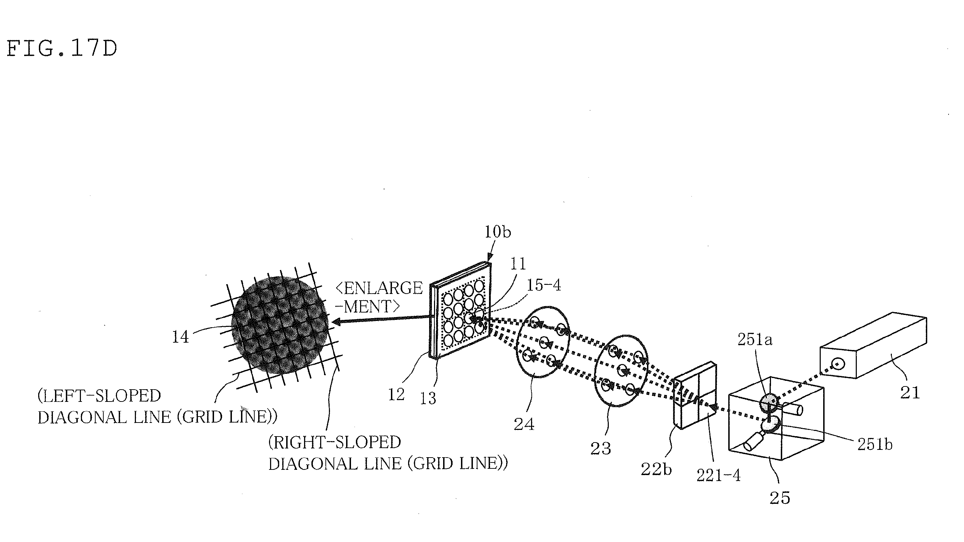

The method of forming the fine periodic compositions in a plurality of regions 11 constituting the region group 15-3 and in a plurality of regions 11 constituting the region group 15-4 is similar to the method described above in the present embodiment (the method of forming the fine periodic compositions in the regions 11 constituting the region groups 15-1 and 15-2). However, when fine periodic compositions are formed in the regions 11 constituting the region group 15-3, the laser light from the laser scanner 25 is passed through the third diffraction optical element 221-3 of the beam splitter 22b, as shown in FIG. 17C. When fine periodic compositions are formed in the regions 11 constituting the region group 15-4, the laser light from the laser scanner 25 is passed through the fourth diffraction optical element 221-4 of the beam splitter 22b, as shown in FIG. 17D. As a result, fine periodic compositions in which the arrangement direction of processed parts 14 is inclined 45° from the reference angle are formed in the regions 11 constituting the region group 15-3. Fine periodic compositions in which the arrangement direction of processed parts 14 is inclined 75° from the reference angle are formed in a plurality of regions 11 constituting the region group 15-4.

Thus, the diffraction optical elements 221-1 to 221-4 through which the laser light passes are changed for each of the region groups 15, so that fine periodic compositions in which the arrangement directions of the processed parts 14 vary according to the region groups 15 (i.e. according to the region-forming ranges 16) can be formed.

The traveling directions of the light fluxes split in the four diffraction optical elements 221-1 to 221-4 are not limited to 0°, 18°, 45°, and 75°, and can be any preferable angles. [0096]

(4) Examples

(4-1) First Example

Now, a first example according to the present invention and a first comparative example to be compared with the first example are described.

Here, the structure 10 in which the arrangement directions of the processed parts 14 vary according to the regions 11 is the first example, and the structure 10 in which the arrangement direction of the processed parts 14 is the same in all the regions 11 is the first comparative example. These examples were compared with each other.

<First Example>

Zinc oxide particles (MZ-500 manufactured by Tayca Corporation) having a mean particle diameter of 25 nm were added to an epoxy paint so that the amount of the zinc oxide particles was 40 parts by weight as compared to 100 parts by weight of a resin component of the paint. The paint was then blended.

This paint was applied to one side of an aluminum plate (having a thickness of 200 $\mu$m) to confect a sample. In this case, the thickness of a coating was about 2 $\mu$m.

Furthermore, a polyester amino paint was applied to the coating side of the confected sample, and a protective layer was confected. In this case, the thickness of the protective layer was about 6 $\mu$m.

The third harmonic of a Q-switched pulsed YAG laser (having a wavelength of 355 nm) was used as laser light to be applied. The pulse width of the pulsed YAG laser was 5 ns, and the pulse repetition frequency was 10 Hz.

The structure-forming device 20 was used to apply the laser light to the sample from the side where the coating was formed, and a fine periodic composition was thereby formed. The method of forming this fine periodic composition is similar to the method described above in "(3-1) First Embodiment of Structure-forming Method". That is, the beam splitter 22a of the structure-forming device 20 was rotated at a constant speed (15 rpm), and a pulse of laser light was applied to the sample whenever the inclination angle of the beam splitter 22a was inclined 9° (0°, 9°, 18°, 27°, ... 351°, and 360°), whereby fine periodic compositions were formed.

As a result, a fine periodic composition was formed in each region 11 so that the arrangement directions of the processed parts 14 varied according to the regions 11.

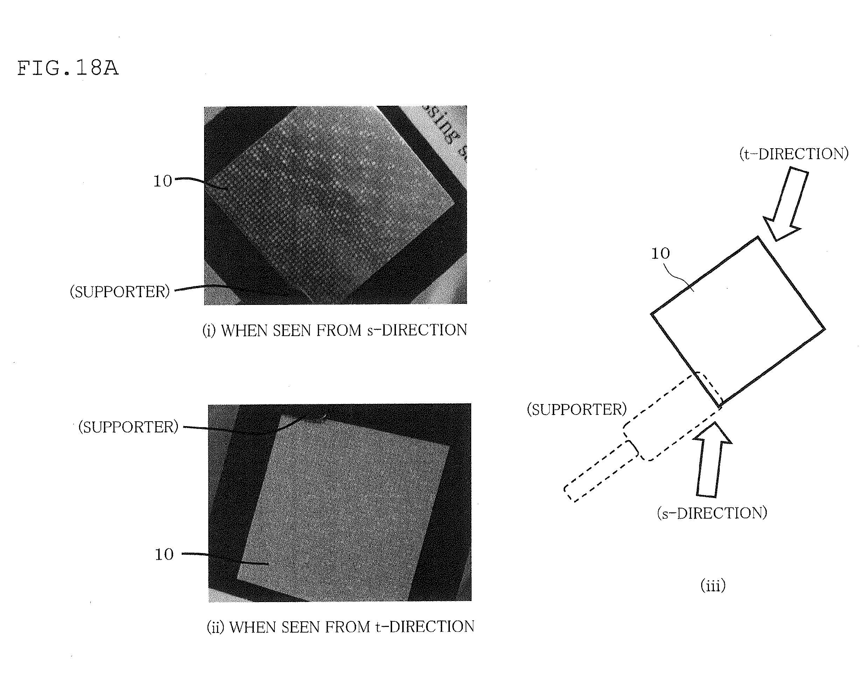

The surface of the sample was photographed, and structural color generation in any of the regions 11 could be visually recognized both when seen from the s-direction and when seen from the t-direction, as shown in (i) and (ii) of FIG. 18A.

It should be noted that the s-direction is a direction in which the surface of the sample is seen from one corner side of the quadrangular sample, as shown in (iii) of FIG. 18A. The t-direction is a direction in which the surface of the sample is seen from a position slightly shifted from the corner opposite to the s-direction, as shown in (iii) of FIG. 18A.

<First Comparative Example>

An ultraviolet absorber (ADK STAB LA-31 manufactured by ADEKA) was added to a polyester paint so that the amount of the ultraviolet absorber was 1 part by weight as compared to 100 parts by weight of a resin component of the paint. The paint was then blended.

This paint was applied to one side of an aluminum plate (having a thickness of 350 $\mu$m) to confect a sample. In this case, the thickness of a coating was about 6 $\mu$m.

The same structure-forming device 20 used in the first example was used.

The structure-forming device 20 was used to apply the laser light to the sample from the side where the coating was formed, and a fine periodic composition was thereby formed. At the same time, the beam splitter 22a of the structure-forming device 20 was not rotated and turned and was fixed.

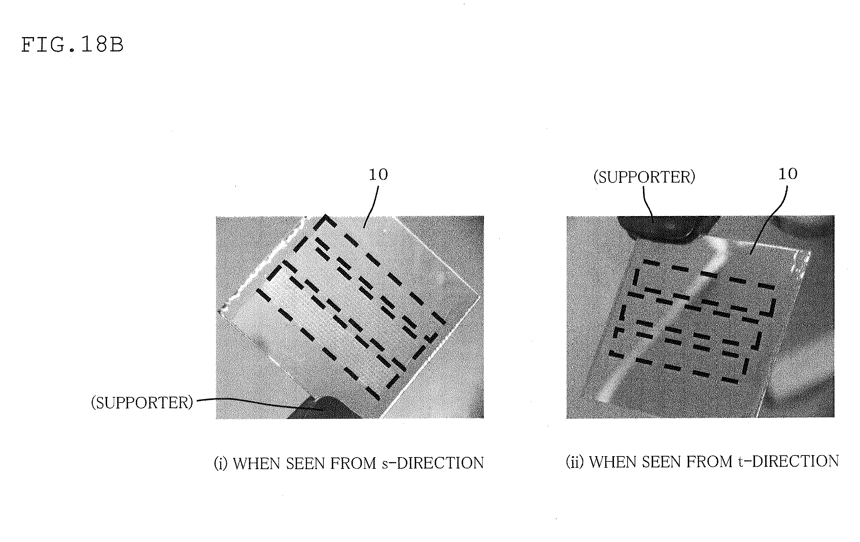

As a result, a fine periodic composition was formed in each of the regions 11 so that the arrangement direction of processed parts 14 was the same in all the regions 11 (within heavy broken lines in (i) and (ii) of FIG. 18B).

The surface of the sample was photographed, and structural color generation in all the regions 11 could be visually recognized when seen from the s-direction, as shown in (i) and (ii) of FIG. 18B. However, structural color generation could not be visually recognized in any of the regions 11 when seen from the t-direction.

As apparent from the comparison between <First Example> and <First Comparative Example>, when the arrangement direction of a plurality of processed parts 14 was the same in all the regions 11, the angle in which the structural color generation could be visually recognized was limited. On the other hand, when the arrangement directions of a plurality of processed parts 14 varied according to the regions 11, structural color generation in any of the regions 11 could be visually recognized when the structure 10 was seen from any direction.

(4-2) Second Example

Now, a second example according to the present invention and a second comparative example to be compared with the second example are described.

Here, the structure 10 in which the diameter of the region 11 is 100 $\mu$m and in which the arrangement directions of the processed parts 14 vary according to the region groups 15 (i.e. according to the region-forming ranges 16) is the second example, and the structure 10 in which the diameter of the region 11 is 0.7 mm and in which the arrangement direction of the processed parts 14 vary according to the regions 11 is the second comparative example. These examples were compared with each other.

<Second Example>

Zinc oxide particles (MZ-500 manufactured by Tayca Corporation) having a mean particle diameter of 25 nm were added to an epoxy paint so that the amount of the zinc oxide particles was 20 parts by weight as compared to 100 parts by weight of a resin component of the paint. The paint was then blended.

This paint was applied to one side of an aluminum plate (having a thickness of 250 $\mu$m) to confect a sample. In this case, the thickness of a coating was about 2 $\mu$m.

Furthermore, a polyester amino paint was applied to the coating side of the confected sample, and a protective layer was confected. In this case, the thickness of the protective layer was about 6 $\mu$m.

The structure-forming device 20 having a configuration shown in FIG. 13 was used as a structure-forming device. However, the beam splitter 22b having the configuration shown in FIG. 14 was used as the beam splitter 22.

The third harmonic of a Q-switched pulsed YAG laser (having a wavelength of 355 nm) was used as laser light to be applied. The pulse width of the pulsed YAG laser was 5 ns. [0105]

The structure-forming device 20 was used to apply the laser light to the sample from the side where the coating 13 was formed, and a fine periodic composition was thereby formed. The method of forming this fine periodic composition is similar to the method described above in "Second Embodiment of Structure-forming Method". That is, the diffraction optical elements 221-1 to 221-4 through which the laser light was transmitted were changed for each of the region groups 15 among the diffraction optical elements 221-1 to 221-4 that constituted the beam splitter 22b of the structure-forming device 20. At the same time, laser light was applied to the sample to form fine periodic compositions in a large number of regions 11.

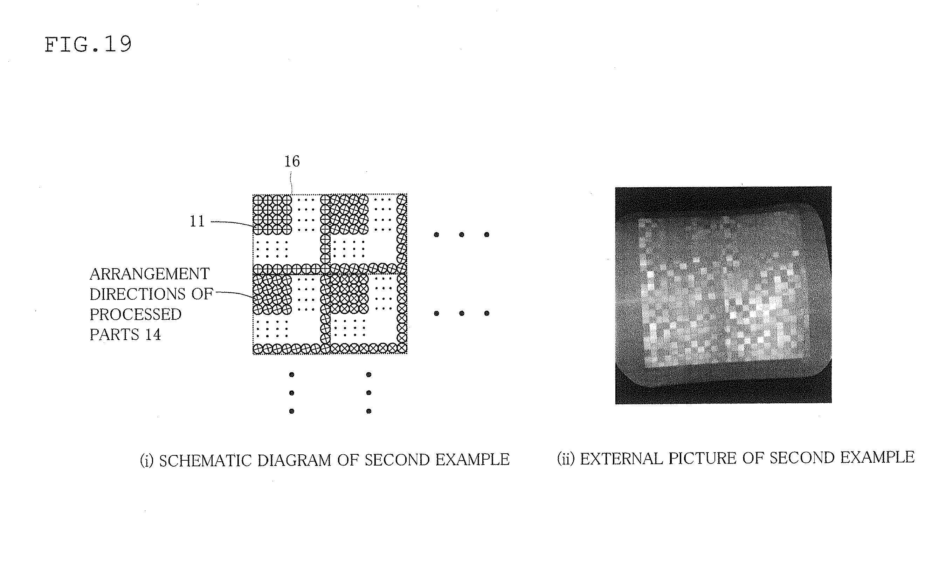

As a result, a fine periodic composition was formed in each region 11 so that the arrangement directions of the processed parts 14 varied according to the region groups 15 (i.e. according to the region-forming ranges 16) (see (i) of FIG. 19). A large number of region groups 15 were arranged all over the upper surface of the sample. Moreover, the diameter of each of the regions 11 was 100 $\mu$m.

The surface of the sample was photographed, and structural color generation in the regions 11 of a large number of the region groups 15 could be visually recognized, and a brilliant decorative effect was obtained, as shown in (ii) of FIG. 19.

<Second Comparative Example>

A polyester paint was applied to the upper surface of an aluminum plate (having a thickness of 250 $\mu$m), and a vinyl acrylic paint was applied to the upper surface of the polyester paint, and a sample was confected. In this case, the thickness of the polyester coating (lower layer) was about 4 $\mu$m, and the thickness of the vinyl acrylic coating (upper layer) was about 4 $\mu$m.

The structure-forming device 20 having the configuration shown in FIG. 10 was used as a structure-forming device. That is, the structure-forming device 20 having a configuration which was provided with no laser scanner 25 and which was provided with the beam splitter 22a was used.

The fourth harmonic of a Q-switched pulsed YAG laser (having a wavelength of 266 nm) was used as laser light to be applied. The pulse width of the pulsed YAG laser was 5 ns.

The structure-forming device 20 was used to apply the laser light to the sample from the side where the coating 13 was formed, and a fine periodic composition was thereby formed. At the same time, a beam splitter 140 of the structure-forming device 20 was rotated at a constant speed, and a pulse of laser light was applied to the sample whenever the inclination angle of the beam splitter 140 was inclined 9° (0°, 9°, 18°, 27°, ... 351°, and 360°), whereby fine periodic compositions were formed.

As a result, a fine periodic composition was formed in each region 11 so that the arrangement directions of a plurality of processed parts 14 varied according to the regions 11 (see (i) of FIG. 5B). A large number of regions 11 were arranged on the upper surface of the sample. Moreover, the diameter of each of the regions 11 was 0.7 mm.

The surface of the sample was photographed, and structural color generation in any of the regions 11 could be visually recognized, as shown in (ii) of FIG. 5B. However, the structural color generation could be visually recognized not in each of the region groups 15 but in each of the regions 11.

As apparent from the comparison between <Second Example> and <Second Comparative Example>, it was found out that a significant brilliant impression was developed and a high decorative effect could be obtained in <Second Example>. That is, it was found out that a higher decorative effect could be obtained when the region 11 is smaller in size and when the arrangement directions of the processed parts 14 varied according to the region groups 15 (i.e. according to the region-forming ranges 16) than when the fine periodic composition was formed so that the arrangement directions of the processed parts 14 varied according to the regions 11.

As described above, according to the structure, the structure-forming method, and the structure-forming device according to the present embodiment, the arrangement directions of a plurality of processed parts constituting a fine periodic composition vary from region to region. Therefore, structural color generation in any of the regions can be visually recognized when the structure was seen from any direction.

When the direction to see the structure is changed, the region in which structural color generation can be visually recognized changes, and brilliant decorative expressions can be obtained.

While the preferred embodiments of the structure, the structure-forming method, and the structure-forming device according to the present invention have been described, it should be appreciated that the structure, the structure-forming method, and the structure-forming device according to the present invention are not exclusively limited to the embodiments described above, and various modifications can be made within the scope of the present invention.

For example, the structure shown in FIG. 1 and others is in the shape of a flat plate. However, the structure is not limited to the flat plate, and may be in the shape of a curved surface or in a three-dimensional shape.

Moreover, a plurality of regions are regularly arranged in the longitudinal and lateral directions in FIG. 1 and others, but are not limited to this arrangement, and can be arranged in any manner. For example, it is possible to use a plurality of regions to draw letters or draw the outline of a character.

Industrial Applicability

The present invention relates to a structure having a fine periodic composition, and is therefore applicable to materials that can form the fine periodic composition and to devices for forming the fine periodic composition.

Reference Signs List

    10: structure
    11: region
    12: base material

13: coating
14: processed part
14-1: depression
14-2: cavity
15: region group
16: region-forming range
17: surface
18: protective layer
19: interface
20: structure-forming device
21: laser oscillator
22 ((22a, 22b): beam splitter
23: first lens
24: second lens
25: laser scanner

**Claims**

1. A structure which has a processed part formed by the occurrence of photodisintegration attributed to the application of pulsed laser light, **characterized in that**
a fine periodic composition in which a plurality of processed parts are arranged in the form of grid cross points is formed in one region of the structure,
a large number of regions are arranged in the structure,
each of a plurality of ranges obtained by the division of a surface in which the regions are arranged is a region-forming range,
one or more regions are arranged in one region-forming range, and
the arrangement directions of the processed parts formed in each of the large number of regions vary according to the region-forming ranges.

2. The structure according to claim 1, **characterized in that**
a plurality of regions are arranged in one region-forming range, and the processed parts in the same arrangement direction are formed in each of the regions, and
when a plurality of regions constitute a region group, an arrangement direction of the processed parts formed in each of the regions constituting one region group is different from an arrangement direction of the processed parts formed in each of the regions constituting another region group.

3. The structure according to claim 1 or 2, **characterized in that**
the shape of the region-forming range in which a plurality of regions are arranged is quadrate, circular, elliptic, or polygonal.

4. The structure according to any one of claims 1 to 3, **characterized in that**

the processed part includes
a depression formed in the surface of the structure or in an interface of a plurality of layers of the structures, or
a cavity formed inside the structure, in an interface of a plurality of layers of the structures, or inside a layer that constitutes a plurality of layers of the structures.

5. The structure according to any one of claims 1 to 4, **characterized in that**
the structure in which the fine periodic composition is formed includes
a coating provided on the surface of a metallic or plastic base material.

6. The structure according to claim 5, **characterized in that**
the base material is a metal cap, a metal can, a plastic cap, or a plastic bottle, and
the coating is formed on the outer side of a top plate of the metal cap or the plastic cap or on the outer side of a barrel of the metal can or the plastic bottle.

7. A structure-forming method of forming, in a structure, a fine periodic composition in which processed parts formed by the occurrence of photodisintegration attributed to the application of pulsed laser light are arranged in the form of grid cross points, **characterized in that**
a laser oscillator outputs laser light,
a beam splitter splits the laser light into a plurality of light fluxes,
a lens causes interference of the light fluxes and then applies the light fluxes to the structure to form the fine periodic composition, and
when the fine periodic compositions are formed in a plurality of regions in the structure, the angle of the beam splitter is changed for each of the regions or for each of the adjacent regions, and the direction of the interference of the light fluxes is changed to form the fine periodic compositions.

8. A structure-forming method of forming, in a structure, a fine periodic composition in which processed parts formed by the occurrence of photodisintegration attributed to the application of pulsed laser light are arranged in the form of grid cross points, **characterized in that**
a laser oscillator outputs laser light,
a laser scanner reflects the laser light and then propagates the laser light toward a beam splitter having a plurality of diffraction optical elements different in splitting angle,
the diffraction optical element which has received the laser light among the diffraction optical elements of the beam splitter splits the laser light into a plurality of light fluxes,

a lens causes interference of the light fluxes and then applies the light fluxes to the structure to form the fine periodic composition, and

when the fine periodic compositions are formed in a large number of regions in the structure, the laser scanner changes the reflection angle of the laser light so that the diffraction optical element to receive the laser light is switched between the formation of the fine periodic compositions in the adjacent regions among the large number of regions and the formation of the fine periodic compositions in the other regions.

9. The structure according to claim 8 or 9, **characterized in that**
the beam splitter splits the laser light into three or more directions, and forms a fine periodic composition in which the processed parts are arranged in the form of grid cross points of a polygon which varies in shape depending on the number of splits.

10. A structure-forming device configured to apply pulsed laser light to a structure to form, in the structure, a fine periodic composition in which processed parts formed by the occurrence of photodisintegration are arranged in the form of grid cross points, the structure-forming device **characterized by** comprising:

a laser oscillator which outputs laser light;
a beam splitter which splits the laser light into a plurality of light fluxes and which is rotated or turned around a traveling direction of the laser light;
a lens which causes interference of the light fluxes and then applies the light fluxes to the structure to form the fine periodic composition; and
angle adjusting means for changing the angle of the beam splitter whenever the fine periodic composition is formed in any of a plurality of regions in the structure during the formation of the fine periodic compositions in the regions.

11. A structure-forming device configured to apply pulsed laser light to a structure to form, in the structure, a fine periodic composition in which processed parts formed by the occurrence of photodisintegration are arranged in the form of grid cross points, the structure-forming device **characterized by** comprising:

a laser oscillator which outputs laser light;
a laser scanner which reflects the laser light;
a beam splitter which receives the laser light reflected by the laser scanner and then splits the laser light into a plurality of light fluxes; and
a lens which causes interference of the light fluxes and then applies the light fluxes to the structure to form the fine periodic composition,

wherein the beam splitter has a plurality of diffraction optical elements different in splitting angle, and

the laser scanner changes the reflection angle of the laser light so that the diffraction optical element to receive the laser light is switched between the formation of the fine periodic compositions in adjacent regions among a large number of regions in the structure and the formation of the fine periodic compositions in the other regions.

FIG.1

(GRID LINE (LONGITUDINAL LINE))

(GRID LINE (LATERAL LINE))

14(14-1)

⟨ENLARGEMENT⟩

(11-1)

10a

16

11

13

12

14(14-1)

⟨ENLARGEMENT⟩

(11-2)

(GRID LINE (RIGHT-SLOPED DIAGONAL LINE))

(GRID LINE (LEFT-SLOPED DIAGONAL LINE))

EP 2 724 869 A1

FIG.2A

11-12  11-13  11-14 ··· 11-19

11-11
11-21
11-31
.
.
.
11-91

10a

16

11-98  11-99

FIG.2B

S

11-11

10a

S

S

11-99

S

FIG.2C

T                    T

11-12

10a

11-98

T                    T

FIG.3

(GRID LINE (LONGITUDINAL LINE))

(GRID LINE (LATERAL LINE))

14(14-1)

〈ENLARGEMENT〉

14(14-1)

(GRID LINE (RIGHT-SLOPED DIAGONAL LINE))

(GRID LINE (LEFT-SLOPED DIAGONAL LINE))

〈ENLARGEMENT〉

(15-2)

(15-1)

10b

15

11

16

13

12

EP 2 724 869 A1

FIG.4A

11-12  11-13  11-21  15-2  11-29

15-1
11-11
11-14
11-17
11-19
15-4
15-5
15-7

10b

15-3

15-6

16

15-8  15-9  11-98  11-99

FIG.4B

S

10b

15-1

15-3

S

S

15-5
15-7

15-9

S

FIG.4C

T                    T

15-2

10b

15-4

15-6

15-8

T                    T

# FIG.5A

11

ARRANGEMENT DIRECTIONS
OF PROCESSED PARTS 14

( i )

10a

(ii)

WHEN SIZE OF REGION 11 IS LARGE

EP 2 724 869 A1

# FIG.5B

11

ARRANGEMENT DIRECTIONS
OF PROCESSED PARTS 14

10a

( i )                    (ii)

WHEN SIZE OF REGION 11 IS SMALL

FIG.6

ARRANGEMENT DIRECTIONS
OF PROCESSED PARTS 14

(i)

(ii)

EP 2 724 869 A1

FIG.7

ARRANGEMENT DIRECTIONS
OF PROCESSED PARTS 14

11

16

SHAPE OF REGION-FORMING RANGE 16: CIRCULAR

10b

(ⅰ)

(ⅱ)

EP 2 724 869 A1

FIG.8

ARRANGEMENT DIRECTIONS
OF PROCESSED PARTS 14

( i )

SHAPE OF REGION-FORMING RANGE 16: STARLIKE

( ii )

FIG.9A

FIG.9B

FIG.9C

FIG.9D

FIG.10

ROTATION OR TURN

FIG.11

| GRID PATTERN OF DEPRESSIONS OR PROJECTIONS IN BEAM SPLITTER 22A | POSITION WHERE SPLIT LIGHT FLUXES PASS THROUGH FIRST LENS 23 | GRID PATTERN OF PROCESSED PARTS 14 IN STRUCTURE 10 |
|---|---|---|
| (DEPRESSION) ~22a<br><br>(1−1) | ~23<br>(SPLIT LIGHT FLUX)<br>(2−1) | ~10<br>~14<br>(GRID LINE (LONGITUDINAL /LATERAL DIRECTION))<br>(SHAPE OF GRID :QUADRANGULAR)<br>(3−1) |
| (DEPRESSION) ~22a<br><br>(1−2) | ~23<br>(SPLIT LIGHT FLUX)<br>(2−2) | ~10<br>~14<br>(GRID LINE (LONGITUDINAL /LATERAL DIRECTION))<br>(SHAPE OF GRID :QUADRANGULAR)<br>(3−2) |
| (DEPRESSION) ~22a<br><br>(1−3) | ~23<br>(SPLIT LIGHT FLUX)<br>(2−3) | ~10<br>~14<br>(GRID LINE (LONGITUDINAL DIRECTION AND TWO DIAGONAL DIRECTIONS))<br>(SHAPE OF GRID :TRIANGULAR)<br>(3−3) |

EP 2 724 869 A1

FIG.12

EP 2 724 869 A1

FIG.13

FIG.14

EP 2 724 869 A1

FIG.15A

EP 2 724 869 A1

FIG.15B

FIG.15C

(INCLINATION AXIS)

90° (INCLINATION AXIS)

21

(REFERENCE AXIS)

22a

23

24

10a

11-3

<ENLARGE -MENT>

12  13

(LATERAL GRID LINE)

14

(LONGITUDINAL GRID LINE)

FIG.16

(HIGH-INTENSITY REGION)

(INTERFERENCE REGION)

10

$\lambda$

$\theta$

$\lambda$

FIG.17A

EP 2 724 869 A1

FIG.17B

EP 2 724 869 A1

(LEFT-SLOPED
DIAGONAL LINE (GRID LINE))

(RIGHT-SLOPED DIAGONAL LINE (GRID LINE))

<ENLARGE
-MENT>

EP 2 724 869 A1

FIG.17C

10b

14

<ENLARGE
-MENT>

11

15-3

12  13

(LEFT-SLOPED DIAGONAL
LINE (GRID LINE))

(RIGHT-SLOPED
DIAGONAL LINE (GRID LINE))

24

23

22b  221-3

251a

251b

25

21

FIG.17D

10b

11

15-4

14

<ENLARGE
-MENT>

(LEFT-SLOPED
DIAGONAL LINE (GRID LINE))

(RIGHT-SLOPED
DIAGONAL LINE (GRID LINE))

12  13

24

23

22b  221-4

251a

251b

25

21

# FIG.18A

(i) WHEN SEEN FROM s-DIRECTION

(ii) WHEN SEEN FROM t-DIRECTION

(iii)

FIG.18B

(SUPPORTER)

10

(ii) WHEN SEEN FROM *t*-DIRECTION

(SUPPORTER)

10

(i) WHEN SEEN FROM *s*-DIRECTION

# FIG.19

16

11

ARRANGEMENT
DIRECTIONS OF
PROCESSED
PARTS 14

(i) SCHEMATIC DIAGRAM OF SECOND EXAMPLE

(ii) EXTERNAL PICTURE OF SECOND EXAMPLE

FIG.20

FIG.21A

120 — 100

FIG.21B

S

120 — 100

S → ← S

(STRUCTURAL COLOR
DEVELOPMENT CAN BE
VISUALLY RECOGNIZED)

S

FIG.21C

T     T

120 — 100

(STRUCTURAL COLOR
DEVELOPMENT
CANNOT BE VISUALLY
RECOGNIZED)

T     T

| | | International application No. |
|---|---|---|
| **INTERNATIONAL SEARCH REPORT** | | PCT/JP2012/003973 |

A. CLASSIFICATION OF SUBJECT MATTER
*B44C1/22*(2006.01)i, *B23K26/36*(2006.01)i, *G02B5/18*(2006.01)i

According to International Patent Classification (IPC) or to both national classification and IPC

B. FIELDS SEARCHED

Minimum documentation searched (classification system followed by classification symbols)
B44C1/22, B23K26/36, G02B5/18

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | WO 2010/064344 A1 (Panasonic Corp.),<br>10 June 2010 (10.06.2010),<br>paragraphs [0008] to [0012], [0026] to [0038];<br>fig. 1 to 2<br>& US 2011/0090564 A1 & EP 2357091 A1<br>& CN 101925473 A | 1-8,10-11<br>9 |
| Y<br>A | JP 2010-030279 A (Toyo Seikan Kaisha, Ltd.),<br>12 February 2010 (12.02.2010),<br>paragraphs [0056] to [0066]; fig. 1 to 16<br>& US 2011/0058171 A1 & EP 2292370 A1<br>& WO 2009/136598 A1 & CN 102015188 A | 1-8,10-11<br>9 |

☒ Further documents are listed in the continuation of Box C. ☐ See patent family annex.

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>05 September, 2012 (05.09.12) | Date of mailing of the international search report<br>18 September, 2012 (18.09.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/003973

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | WO 2004/101211 A1 (Mitsubishi Electric Corp.),<br>25 November 2004 (25.11.2004),<br>page 7, lines 28 to 45; fig. 4<br>& US 2005/0247682 A1 & WO 2004/101211 A1<br>& DE 112004000048 T & KR 10-2006-0012010 A<br>& CN 1700968 A & TW 275439 B | 7,10<br>9 |
| Y<br>A | JP 11-047963 A (NEC Corp.),<br>23 February 1999 (23.02.1999),<br>paragraph [0025]<br>& US 6130403 A | 7,10<br>9 |

Form PCT/ISA/210 (continuation of second sheet) (July 2009)

**INTERNATIONAL SEARCH REPORT**

International application No.

PCT/JP2012/003973

The meaning of the following wording found in claims 1-11 is unclear.
(1) Occurrence of photolysis
(2) Periodic microstructure arranged in the form of lattice points

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010030279 A